# EUROPEAN PATENT SPECIFICATION

(11) **EP 4 320 807 B1**
(45) Date of publication and mention of the grant of the patent: **16.09.2026**
(21) Application number: 22717883.7
(22) Date of filing: 06.04.2022
(51) Int. Cl.: H04L 9/00, H04W 12/043, H04W 12/40, H04W 12/30, G06F 21/74

(54) **SIM CRYPTOGRAPHIC KEY STORAGE**
SPEICHERUNG EINES KRYPTOGRAFISCHEN SIM-SCHLÜSSELS
STOCKAGE DE CLÉ CRYPTOGRAPHIQUE SIM

(30) Priority: 09.04.2021 GB 202105090
(43) Date of publication of application: 14.02.2024
(73) Proprietor: Dabco Limited, Newbury, Berkshire RG14 2FN (GB)
(72) Inventor: POSCHKE, Nils, London Greater London W2 6BY (GB); PALMER, David, London Greater London W2 6BY (GB); BENTO, Jorge, London Greater London W2 6BY (GB)
(74) Representative: Boult Wade Tennant LLP
(86) International application number: PCT/GB2022/050858
(87) International publication number: WO 2022/214804

(56) References cited:
- WO-A1-2019/217428
- US-A1- 2017 236 121
- US-B2- 10 382 485
- GSMA: "Common Implementation Guide to Using the SIM as a 'Root of Trust' to Secure IoT Applications", 3 December 2019 (2019-12-03), XP055693329, Retrieved from the Internet <URL:https://www.gsma.com/iot/wp-content/uploads/2019/12/IoT.04-v1-Common-Implementation-Guide.pdf> [retrieved on 20200508]
- GSMA: "IoT Security Applet Interface Description", 3 December 2019 (2019-12-03), pages 1 - 62, XP055698607, Retrieved from the Internet <URL:https://www.gsma.com/iot/wp-content/uploads/2019/12/IoT.05-v1-IoT-Security-Applet-Interface-Description.pdf> [retrieved on 20200526]

## Description

### Field of the Invention

The present invention relates to a system and method for recording transactions on a distributed ledger and in particular, for a device or object to generate such transactions securely.

### Background of the Invention

There is a common need for different entities to interact and transact with each other to exchange value. However, for this to be done in a safe and secure manner for each party to a transaction, a level of trust is required to exist between transacting entities. In the absence of such trust, other structures and procedures are necessary such as enforceable contracts and third party authorities or intermediaries.

Cryptocurrencies are digital currencies that are a form of alternative currency (or private currency). They are usually distinct from centrally controlled government-issued currencies (for example, fiat money) and offer a decentralised or distributed form of currency and/or medium of exchange. Digital currencies may be transacted or transferred from one owner or entity to another and may be used for any purpose, such as buying goods, purchasing services or even obtaining data. As such, digital currencies represent an alternative to traditional currencies.

One example of a cryptocurrency is bitcoin, although many other cryptocurrency systems have been devised. Bitcoin was developed by Satoshi Nakamoto and the original paper, 'Bitcoin: A Peer-to-Peer Electronic Cash System', outlining the fundamentals of bitcoin technology and principles may be found at https://bitcoin.org/bitcoin.pdf.

Technology underlying distributed cryptocurrencies, such as distributed ledgers, can also be used to record other types of transactions and can form a verifiable history of exchanges or other forms of data without requiring trust to exist between entities. Distributed ledgers, such as blockchains, enable transactions and exchanges of value to occur in the absence of such trust. However, this requires the use of public blockchains to form a consensus that is difficult to corrupt or control by any individual actor or entity. This usually takes the form of a race to consensus based on a proof of work but this itself can consume very high levels of resources in the form of computing and electrical power.

An alternative approach uses private blockchains but this reintroduces the requirement for trust to be developed between parties and the owner and controller of the private blockchain itself.

Trust can be developed by determining and verifying the identity or other characteristics of the entities but this effort can introduce overheads and additional work leading to inefficiencies and extra load for a computer or telecommunications network. Furthermore, such verification or checks often depend on separate sources of information, each of which may also need to be verified and approved or trusted. This may require significant bandwidth and processing resources. Therefore, this approach may only be appropriate for certain entities transacting above a particular value, where the overheads do not become a significant burden. This also prevents new exchanges of value from developing between entities that are new to each other or transient exchanges of low value but at high volume. For small or numerous entities or devices, such as those forming the internet of things or other low computing power devices, the overheads can vastly overwhelm the small exchanges of value. Therefore, this limits the efficiency and scalability necessary for exchanging value or data packages, especially for autonomous or unsupervised devices.

Therefore, there is required a method and system that overcomes these problems.

Common Implementation Guide to Using the SIM as a 'Root of Trust' to Secure loT Applications describes how to leverage existing mobile network operator assets to secure IoT services.

US 10,382,485 provides an approach for registering and authenticating Internet of things (IoT) devices. In one embodiment, an installation device receives, from an loT device, an identifier (ID) and a hash of a public key, where the loT device itself generates the ID, the public key, and a private key. To register the loT device, a blockchain wallet in the installation devices generates a blockchain transaction which adds the received ID and hash of the public key as a name and value pair in a name/value storage (NVS). The hash of the public key may then be retrieved from the NVS and used in authentication of the loT device to other loT devices or servers, among other things.

WO 2019/217428 describes a distributed ledger interworking architecture is described wherein a distributed ledger proxy interfaces with loT service layer systems and distributed ledger systems. Service layer nodes may interact with the distributed ledger proxy to leverage functions provided by distributed ledger systems, such as to request that the distributed ledger proxy insert some service layer information into the distributed ledgers. A distributed ledger proxy can support multiple service layer nodes and may interface to multiple different distributed ledger systems.

US 2017/0236121 provides a method for conducting an offline data exchange associated with a blockchain includes: storing a structured data set associated with a blockchain network, the data set including a network identifier, unspent output hash, output index, output value, and key pair; receiving the network identifier and a transaction amount from a point of sale; validating the structured data set as including the network identifier and an output value greater than or equal to the transaction amount; transmitting the unspent output hash and output index to the point of sale; receiving a destination address from the point of sale; generating transaction data including the destination address and a payment amount based on the transaction amount; and transmitting the transaction data to the point of sale.

### Summary of the Invention

The invention is defined by the appended claims.

Transactions are recorded on a distributed ledger, preferably by adding blocks to a blockchain. The distributed ledger does not need to be a public ledger or blockchain, where individual entities are prevented from taking over control using a proof of work and reward system. The distributed ledger can instead be private. Trust needs to be developed between entities that exchange value with the distributed ledger providing a verifiable record of events and transactions. Furthermore, different parties need to ensure that they know who they are transacting with. In order to achieve this, the devices where the transactions originate include a UICC, such as a SIM. When the SIM is manufactured or personalised, a unique key or keys are stored within secure memory within the SIM. The same key (unique to the SIM) is stored or available to a telecommunications network that issued or owns the SIM. This key may be associated with an identifier of the SIM. This key is used to create a secure communications channel between the SIM (or device housing the SIM) and a bootstrapping server function (BSF). The BSF is an element within

the telecommunications network used to implement generic bootstrapping architecture (GBA).

Once the communications channel is secured between the device and the BSF using the pre-stored key then a secret is shared between the BSF and the SIM (within the device) over this secured channel. This shared secret is stored within the secure storage of the SIM. The device then uses this shared secret to identify an entry or transactions added to a block of a distributed ledger. Because the transaction can be identified using or based on the shared secret, which is shared using GBA, then any party can trust the transaction and its provenance or originator is as declared. As the data store on the SIM is secured cryptographically and is tamperproof (even by the device) then this provides additional security, maintaining trust.

Adding the transaction may use the shared secret directly within the transaction identifier, e.g. by using this shared secret itself as part or all of the transaction identifier or derived from it. However, a server such as a proxy server (i.e. an intermediary between the device and the distributed ledger), can carry out the function of adding the transaction to the block using its own identifier or wallet identifier (or one of a set of its wallet identifiers) and mapping the transaction to the shared secret, which is associated with the SIM and device. Such mappings may be stored in a database or other data store either within the proxy server or external to it but accessible by the proxy server. Therefore, transactions and in turn the entities where the transactions originate, can be trusted by other parties or entities due to the trusted nature of the SIM. In this example implantation, different servers may act for different entities, functions or transaction types.

In accordance with a first aspect there is provided method for recording transactions on a distributed ledger, the method comprising the steps of:
creating a secure channel between a device and a bootstrapping server function, BSF, using a pre-provisioned key stored within a UICC of the device and at the BSF;
sharing a secret between the device and the BSF over the secure channel;
storing the shared secret on the UICC of the device; and
adding one or more transaction to a block of a distributed ledger, wherein the one or more transaction is identified using the shared secret. Therefore, transactions or entries onto the distributed ledger can be more trusted as their identifiers can be linked to particular devices in a way that is difficult or impossible to tamper without defeating highly secure SIM key distribution.

Optionally, the method may further comprise the steps of:
transmitting the shared secret to a server from the BSF, wherein the shared secret is used to secure a communications channel between the device and the server and the server adds the one or more transaction to the block of the distributed ledger. Therefore, the server acts as a proxy between the device and the distributed ledger or blockchain. This can improve scalability. There may be a plurality of servers each serving a set of different devices or functions or for load balancing purposes, for example.

Preferably, the one or more transaction may be associated with a wallet identifier of the server within the distributed ledger and the one or more transaction is identified by:
the server storing remotely from the device a transaction identifier of the one or more transaction added to the block of the distributed ledger; and
the server mapping the stored transaction identifier to the shared secret. The association with device may be achieved using other alternative mechanisms.

Optionally, the transaction identifier may be based on an identity of the UICC and the shared secret. The transaction identifier may additionally be based on or derived from an identifier of the device (e.g. IMSI).

Optionally, the transaction may be added to the block is identified by a wallet identifier based on an identity of the UICC and the shared secret.

Preferably, the shared secret may be stored within a trusted execution environment, TEE, of the UICC. This improves security further.

Advantageously, the shared secret may be a symmetric key. Example algorithms used to generate and use the symmetric key include but are not limited to Twofish, Serpent, AES, Camellia, Salsa20, ChaCha20, Blowfish, CAST5, Kuznyechik, DES, etc.

Optionally, creating the secure channel between the device and the BSF and sharing the secret between the device and the BSF over the secured channel may use generic bootstrap architecture, GBA, and/or according to the GSMA loT Security Applet Interface Description, IoT SAFE.

Optionally, the device may be any one of: an loT device, a UE, a smartphone, a vehicle, an automobile, or an unmanned aerial vehicle. Other devices may be used or may implement the method.

According to a second aspect, there is provide a system comprising:
a distributed ledger;
a bootstrapping server function, BSF;
a device having a UICC;
one or more processor and memory, the memory containing program instructions to cause the one or more processor to:
   create a secure channel between the device and the BSF, using a pre-provisioned key stored within the UICC of the device and at the BSF;
   share a secret between the device and the BSF over the secure channel; and
   store the shared secret on the UICC of the device, and
   add one or more transaction to a block of the distributed ledger, wherein the one or more transaction is identified using the shared secret. The system may have components communicating over a telecommunications network.

Optionally, the system may further comprise:
a server;
wherein the BSF is configured to transmit the shared secret to the server;
and wherein the program instructions further cause the one or more processor to use the shared secret to secure a communications channel between the device and the server and wherein the server adds the one or more transaction to a block of the distributed ledger.

Optionally, the one or more transaction may be associated with a wallet identifier of the server, the server further comprising a database configured to store a transaction identifier of the one or more transaction added to the block of the distributed ledger, and a mapping of the stored transaction identifier to the shared secret shared.

Optionally, the transaction identifier may be based on an identity of the UICC and the shared secret.

Preferably, the transaction added to the block may be identified by a wallet or other identifier based on an identity of the UICC and the shared secret.

Preferably, the device comprises the one or more processor and the memory containing program instructions to cause the one or more processor to add the one or more transaction to the block of the distributed ledger.

The methods described above may be implemented as a computer program comprising program instructions to operate a computer. The computer program may be stored on a computer-readable medium.

The computer system may include a processor or processors (e.g. local, virtual or cloud-based) such as a Central Processing unit (CPU), and/or a single or a collection of Graphics Processing Units (GPUs). The processor may execute logic in the form of a software program. The computer system may include a memory including volatile and nonvolatile storage medium. A computer-readable medium may be included to store the logic or program instructions. The different parts of the system may be connected using a network (e.g. wireless networks and wired networks). The computer system may include one or more interfaces. The computer system may contain a suitable operating system such as Java, UNIX, Windows (RTM) or Linux, for example.

It should be noted that any feature described above may be used with any particular aspect or embodiment of the invention.

### Brief description of the Figures

The present invention may be put into practice in a number of ways and embodiments will now be described by way of example only and with reference to the accompanying drawings, in which:
FIG. 1 shows a flowchart of an example method for recording transactions on a distributed ledger;
FIG. 2 shows a schematic diagram of a system for recording transaction on a distributed ledger, including a device having a SIM;
FIG. 3 shows a schematic diagram indicating high level functionality of the system of figure 2;
FIG. 4 shows a shows a schematic diagram of several architectural components of the system of figure 2;
FIG. 5 shows a schematic diagram of an example implementation of the system of figure 2, including a device and a SIM, proxy server and distributed ledger;
FIG. 6 shows a schematic diagram of a further example implementation of the system of figure 2;
FIG. 7 shows a schematic diagram of a system of devices operating according to the system of figure 5;
FIG. 8 shows a schematic diagram in more detail of the system of devices operating according to the system of figure 5;
FIG. 9 shows a schematic diagram of an example implementation of the system of figure 5;
FIG. 10 shows a schematic diagram of a further example implementation of the system of figure 2, including one or more nodes;
FIG. 11 shows a schematic drawing of a node of figure 10;
FIG. 12 shows a schematic diagram of the method steps carried out by the system of figure 10;
FIG. 13 shows a schematic diagram of an example implementation of the system of figure 6;
FIG. 14 shows a schematic diagram of an example implementation of the SIM of figure 5;
FIG. 15 shows a schematic diagram of an example implementation of the device of figure 5;
FIG. 16 shows a flowchart of a method for managing keys used in the method of figure 1;
FIG. 17 shows a schematic diagram of components used within the example implementation of figure 6;
FIG. 18 shows a schematic diagram of the interaction of components used within the example implementation of figure 6;
FIG. 19 shows a schematic diagram illustrating method steps used to generate keys within the example implementation of figure 6;
FIG. 20 shows a schematic diagram illustrating method steps used to exchange data within the example implementation of figure 6;
FIG. 21 shows a schematic diagram of device architecture within the system of figure 2;
FIG. 22 shows a schematic diagram of architecture middleware used to interact with a secure element within the SIM of figure 2;
FIG. 23 shows a sequence diagram of a procedure for signing transactions according to the method of figure 1;
FIG. 24 shows a schematic diagram of method steps within a procedure for signing transactions using the secure element of the SIM of figure 22;
FIG. 25 shows a schematic diagram of a TLS authentication process that uses PKI and using the SIM of figure 22;
FIG. 26 shows a schematic diagram of an example implementation of the distributed ledger of figure 2;
FIG. 27 shows an example use case that implements the method of figure 1;
FIG. 28 shows a sequence diagram of a portion of a method for matching offers within a data exchange;
FIG. 29 shows a sequence diagram of a portion of the method of figure 28;
FIG. 30 shows a schematic diagram of a messaging system used within the system of figure 2;
FIG. 31 shows a schematic diagram of an example implementation of the system of figure 2;
FIG. 32 shows a sequence diagram of method steps used within the messaging system of figure 30;
FIG. 33 shows a sequence diagram of further method steps used within the messaging system of figure 30;
FIG. 34 shows a sequence diagram of an example implementation of the method of figure 1;
FIG. 35 shows a schematic diagram illustrating method steps for provisioning a device for use with the method of figure 1;
FIG. 36 shows a schematic diagram illustrating method steps for setting up a device for use with the method of figure 1;
FIG. 37 shows a schematic diagram illustrating method steps for setting up a device for use with the method of figure 1;
FIG. 38 shows a schematic diagram illustrating method steps for authenticating a user for use with the device of figures 36 and 37;
FIG. 39 shows a schematic diagram illustrating method steps for authenticating a user for use with the device of figures 36 and 37;
FIG. 40 shows a schematic diagram illustrating method steps of an example implementation of the method of figure 1;
FIG. 41 shows a schematic diagram illustrating further method steps of an example implementation of the method of figure 1;
FIG. 42 shows a schematic diagram illustrating further method steps of an example implementation of the method of figure 1;
FIG. 43 shows a schematic diagram illustrating further method steps of an example implementation of the method of figure 1;
FIG. 44 shows a schematic diagram of an example implementation of the system of figure 2;
FIG. 45 shows a schematic diagram illustrating example architecture components of the system of figure 2;
FIG. 46 shows a schematic diagram illustrating an example implementation of a portion of the system of figure 2;
FIG. 47 shows a schematic diagram illustrating an example implementation of the device within the system of figure 2; and
FIG. 48 shows a schematic diagram illustrating an example implementation of an interface with the system of figure 2.

It should be noted that the figures are illustrated for simplicity and are not necessarily drawn to scale. Like features are provided with the same reference numerals.

### Detailed description of the preferred embodiments

The 'Internet of Things' is growing and transitioning to an 'Economy of Things' (EoT). The number of loT devices is growing and generating large volumes of data. IoT devices and smart services interact and interoperate across ownership domains and offers the potential to support data and smart service value transactions automatically in near real time. This can improve interoperability and functionality.

The 'Economy of Things' requires the capability for devices/services to identify, trust each other, and where required automatically transact value directly or using peer-to-peer functionality. There are a range of technologies ranging from Distributed Ledger, Secure Elements, Cryptography and Device Wallets which support Digital ID, Federated Security and transaction applications and services needed for loT, but they are fragmented, have high costs and not sufficiently scalable.

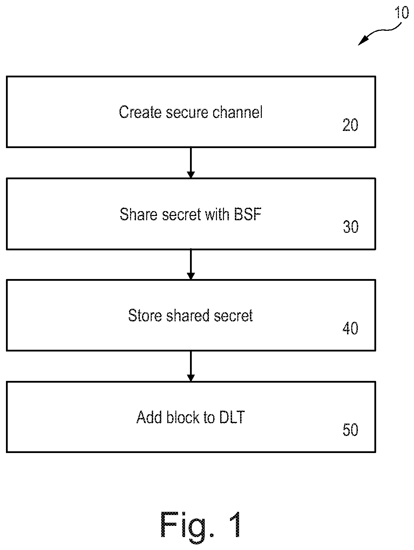

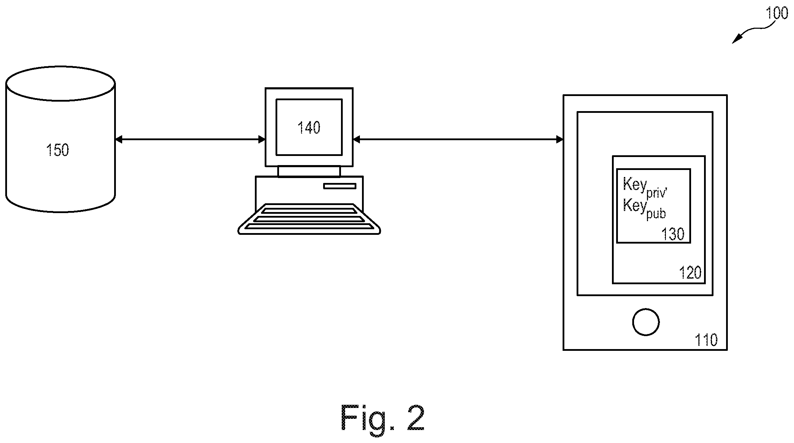

In order to implement a system and method for securely generating transactions, various components are used. Figure 1 shows a flow chart of a method 10 for recording transactions in a distributed ledger. Figure 2 shows a schematic and high level diagram of a system 100 for implementing this method. In this example implementation, the distributed ledger is a blockchain (generated by suitable components) 150 and the device 110 is a mobile device such as smart phone. However, many different devices may be used. Suitable example blockchain technology is described later on.

Symmetric encryption is implemented in method 10. At step 20, a secure communications channel is created between the device 110 (or SIM 120 within the device 110) and a bootstrapping server function (BSF). At step 30, a secret (i.e. a symmetric key) is shared between the BSF and device. This shared secrete is stored within the SIM (e.g. a secure storage location within the SIM) at step 40. A transaction or entry is added to the distributed ledger 150 at step 50. An identifier of the transaction is generated, based on, derived from or otherwise identifiable using the shared secret. This identifier may be derived using a particular algorithm or indirectly identified using a mapping with the shared secret (e.g. a database), for example.

GBA (e.g. SIM Trust) may be used to create a secure channel between the device 110 and an loT Backend or server 140. This provides a secure key management solution that can rapidly generate, distribute and renew secure keys between devices and application servers. SIM Trust generates symmetric keys (e.g. 256 bits). Customers and other entities can use the symmetric keys in many ways, including:
Non-repudiation: proving the source (authentication) and integrity of a message or transaction.

Confidentiality: providing end-to-end encryption (not just radio interface). Therefore, this mechanism builds a secure channel on the application layer on top of mutual authentication and key agreement between a SIM card 120 and the Core Network (HLR, Home Location Register). As a result, a distributed ledger technology (DLT) node can interact with the blockchain using the SIM's identity and be sure that the device 110 is who it claims to be.

The transaction may be added to the distributed ledger 150 directly (i.e. with the device 110 interacting directly with the distributed ledger 150 to add a block on a blockchain) or through an intermediary, server or proxy server 140. This proxy server 140 may be described as a Digital Asset Broker, DAB, or DAB service. In this example implementation, the proxy server 140 adds the transaction to the blockchain with an identifier that identifies the proxy server 140. The proxy server 140 can then hold a data store of transactions that it has added against the identifier based on the public keys of one or more devices (the system may have one or more proxy server 140) but many more devices each associated with one or more proxy servers.

Therefore, the identifier of the transaction on the blockchain may include or be derived from the public key of the stored with the UICC 120 of the device 110 or may be a transaction identifier that is mapped to the identifier derived from the public key. Deriving the identifier may also use an unique identity of the device 110 or user. This may be an IMSI, for example. Other derivation schemes may be used. The use of a proxy server 140 allows simplified processing of the distributed ledger as far fewer identifies are required.

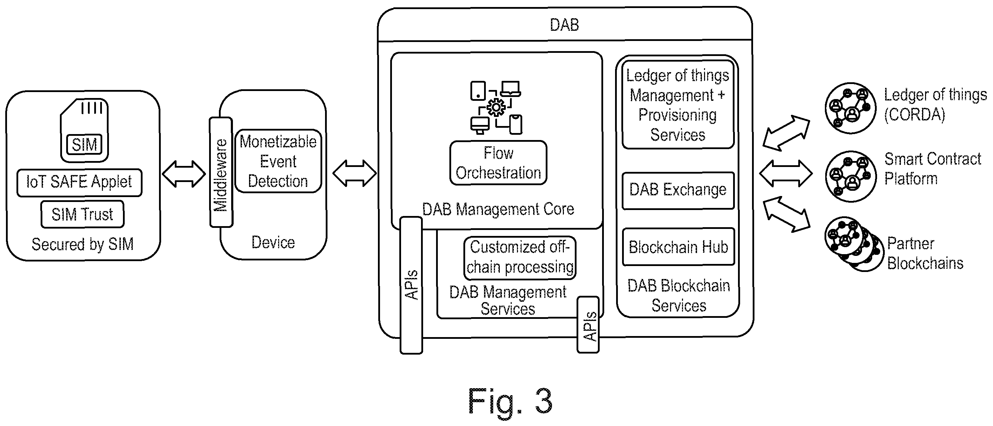

Figure 3 illustrates schematically the high level functionalities of the system.

### UICC (SIM)

Role within the system: Provide secure entry point into a chain of trust (SIM as a customer's asset). Throughout this disclosure, the terms SIM and UICC may be used interchangeably as are application and applet.

### Variants:

▪ Secure Element on the SIM, preferably supporting the GSMA loT SAFE Applet; or
▪ Vodafone SIM Trust based on 3GPP Generic Bootstrapping Architecture (GBA).

There are different implementations of the system. In one implementation, a SIM or UICC applet generates one or more cryptographic key pairs. In another implementation, the SIM or UICC may be provisioned with cryptographic material. For example, this may use 3GPP GBA. However, any of the examples or combinations of features and implementations described throughout may be used with either or both implementation.

### Device

Role within the system: Provide integrator into higher layers (Digital Asset Broker, DAB, Management Core) and harmonize communication (also for SIMs from different telecommunications networks or non-SIM devices). The device may take various forms from simple loT devices (e.g. a utility meter) to vehicles, for example.

### Components:

▪ DAB Middleware for loT SAFE Applet (an illustrative example); or
▪ DAB Middleware for SIM Trust (an example implementation used with method 10 described with reference to figure 1);
▪ Sensor Data Extraction for Monetizable Event Detection

### DAB Management Core

Role within the ecosystem: Brokering of interactions within the DAB system to use on-chain and off-chain_functionalities.

### Components:

▪ Flow Orchestration Engine
▪ Common APIs

### DAB Management Services

Role within the ecosystem: Simplifying flow for MVP (MasterCard, VISA, PayPal) and customizing DAB.

### Components:

▪ Customized Off-chain Processing (off-chain)
▪ Customized APIs

### DAB Blockchain Services

Role within the ecosystem: Providing connectors that translate DAB interactions into blockchain language.

### Components:

▪ Ledger of Things
▪ DAB Exchange
▪ Blockchain Hub including Smart Contract Engine

### Architectural Components

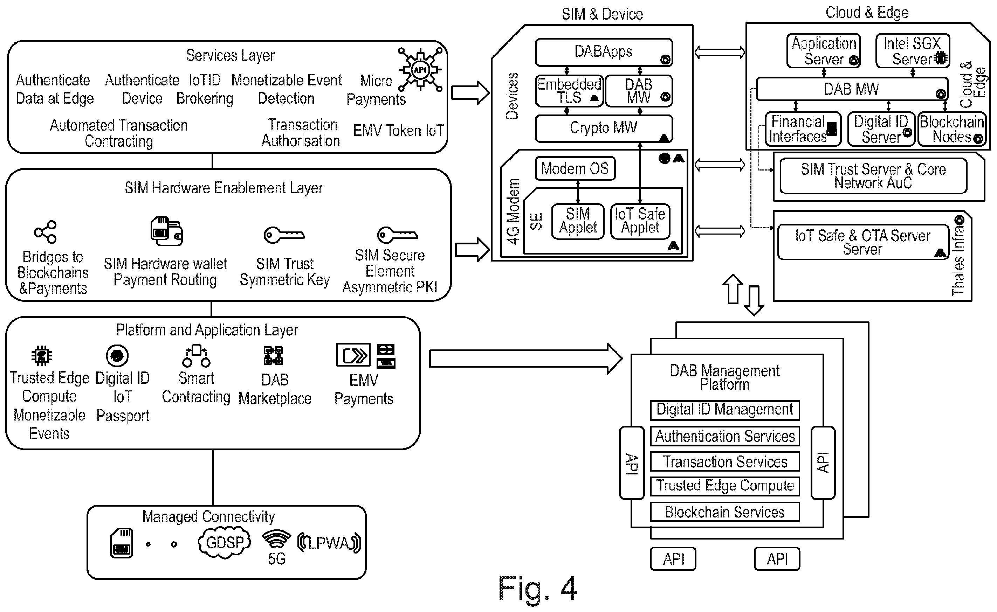

Figure 4 illustrates schematically various architectural components of the system and method.

While the loT SAFE applet implementation (an illustrative example) provides convenient functionality, the use of GBA provisioning (e.g. Vodafone SIM Trust) enables the use within the system of legacy SIMs that may already be deployed. Therefore, the combination of both implementations (that may work simultaneously or separately within the system) allow as many participants as possible to use the system. Device firmware may be updated over the air for legacy devices and so the GBA implementation (e.g. SIM Trust) may be used without changing the UICC or SIM within a device.

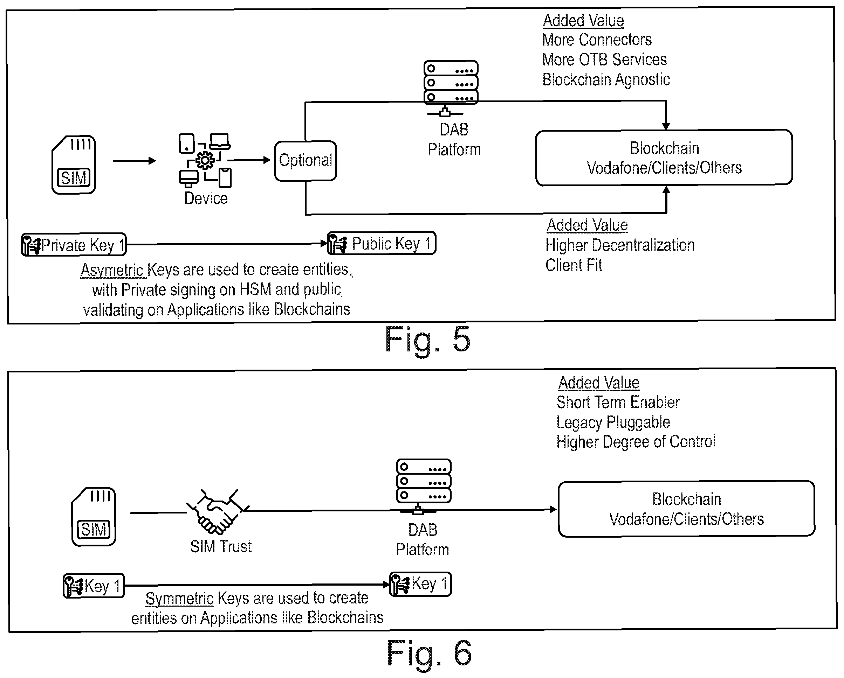

Figures 5 and 6 illustrate at a high level, the use of both implementations with the system 100. The mechanisms are independent but interchangeable and may be suitable for different use cases. As well as providing flexibility for new and legacy SIMs, each implementation option has different advantages. For example, banks & utilities may prefer to interact with the GBA implementation (e.g. SIM Trust) shown in figure 6 because it supports symmetric keys. The SIM applet implementation (e.g. loT SAFE) shown in figure 5 provides improved blockchain interaction because transactions can be signed directly by the UICC or SIM without requiring the need for an intermediate or proxy server 140. Therefore, both mechanisms contemplate each other and satisfy specific technical requirements.

On a high level the main difference between these two mechanisms lies in the cryptographic approach. The loT SAFE Applet uses a secure element on the SIM to store and manage keys predominantly for asymmetric encryption (also known as Public Key Infrastructure, PKI) with public and private key pairs being generated and stored. In the GBA (e.g. SIM Trust) approach mobile network capabilities are used to establish a symmetric encryption between SIM and an endpoint (e.g. a server such as a DAB server).

Asymmetric encryption or PKI is the technology that is used by many IT infrastructures to secure https and other connections between servers using public/private key pairs.

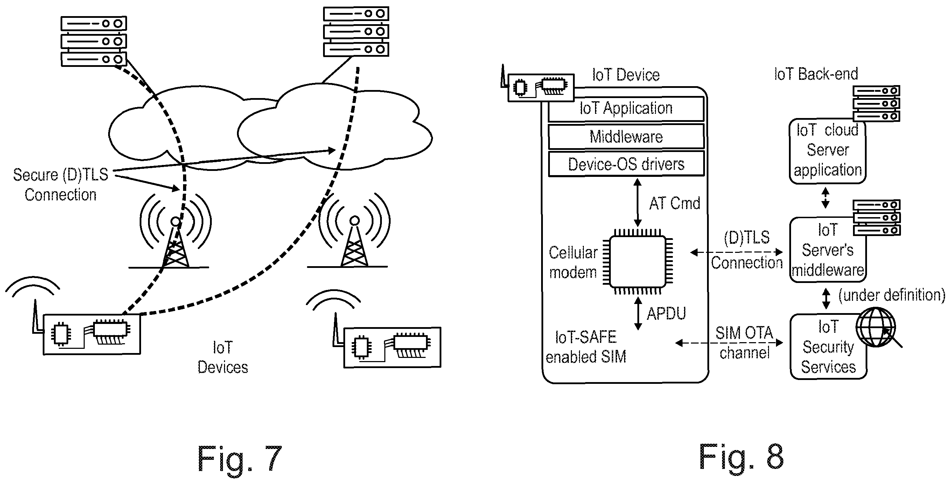

Figures 7 and 8 shows schematically how secure communication channels may be set up between IoT devices and servers using the loT Safe Applet running with the SIM 120. Figure 8 shows in more detail how the device initiates the secure connection with the server.

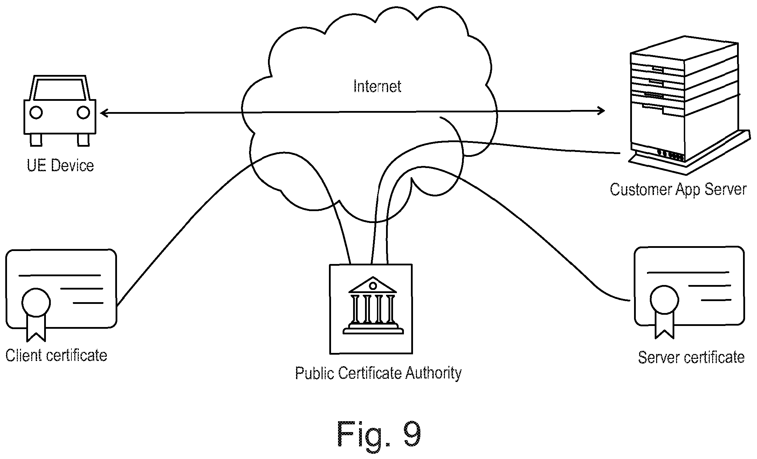

The device is pre-provisioned with a client PKI certificate (e.g. within a UICC or SIM). In the example shown in figure 9, the device is a vehicle but may be any device, mobile or otherwise. The client PKI certificate is preferably a public trust certificate that is procured and signed by a Certificate Authority. The server holds a similar server certificate. When a communication channel is initiated by the client to the server, there is an exchange where both parties authenticate each other using the certificate authority (CA) to confirm the validity of the other party.

The mechanism implemented using the CA makes use of pairs of keys used together, where one encrypts and the second decrypts. The keys can be used with either of them performing the first encryption function while the other key can be used to perform the decryption operation. Because of the asymmetric nature of two different keys performing these functions this is often referred to as "asymmetric" cryptography. One of these keys is public and the other is secret. In a public encryption system, anyone can encrypt a message using a receiver's public key but only the receiver will be able to decrypt the message using his secret key.

Apart from the cryptographic approach, the solution based on loT SAFE delivers some additional features that facilitate further functionalities that may be used with distributed ledger (e.g. blockchain) related environments.

Symmetric encryption algorithms use the same cryptographic keys for both encryption and decryption. The keys, in practice, represent a shared secret between two or more parties that can be used to maintain a private information link. The requirement that both parties have access to the same secret key is one of the main drawbacks of symmetric key encryption, in comparison to asymmetric encryption. In the mobile communication space this solution is facilitated by the device containing a mobile SIM that has a connection to telecommunications network service. Mobile telephony originally had many of the requirements that are present in the loT device space and uses standards based solutions to these problems. These have been developed and scrutinized for a period of more than 20 years and so can be trusted by many entities and organisations.

When a telephony appliance connects to a mobile cellular network, it performs at least two actions including:
▪ Authenticate with and to the mobile network; and
▪ Agree keys that can be used to encrypt communications with the mobile network.

This is typically achieved using the standards based Authentication and Key Agreement (AKA) protocol. The AKA protocol therefore creates trust between a mobile appliance (roaming or otherwise) and a (possibly untrusted) cellular network, such that the two parties can communicate with confidentiality protection.

This alternative technique uses the same AKA protocol, which has been formalized as the Generic Bootstrapping Architecture (GBA), e.g. the Vodafone implementation of SIM Trust, but unlike the conventional cellular use case, the trust is created between the device and an application platform under a user or customer's direct control.

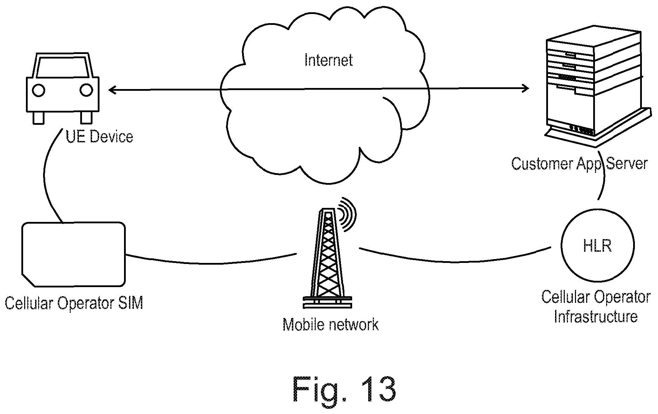

Figure 13 illustrates this GBA implementation. While the UICC or SIM is creating a standard mobile connection to an application server, the AKA protocol is used to create a confidentiality protected communication between the device and a visited Mobile Network. SIM Trust (using the GBA protocol) adds another layer of trust by repeating the AKA flow to create a symmetric encryption between the Device and the App Server. The result is a mutually authenticated secure channel for communications between the two endpoints.

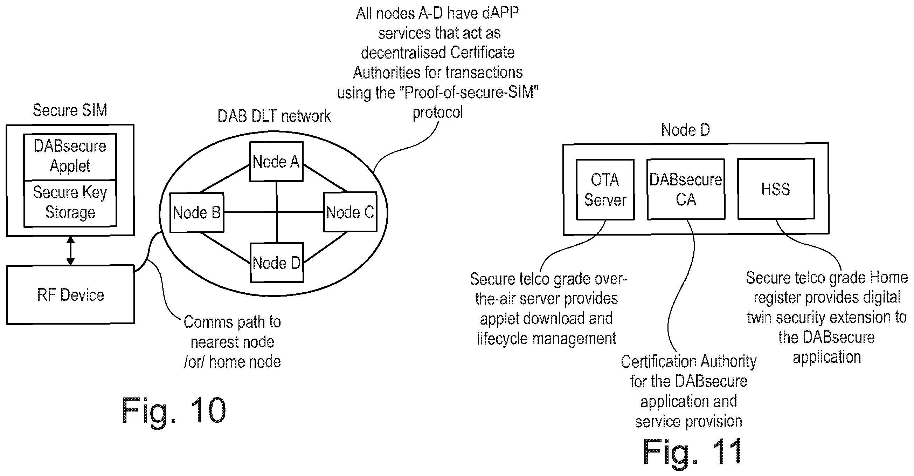

Figure 10 shows an example network arrangement in which individual devices communicate with a node within a distributed ledger network. This network arrangement may be independent of a particular cryptographic scheme (e.g. it may use symmetric or asymmetric encryption). Figure 11 shows schematically the form of the individual nodes. One or more nodes may be present in the network.

In more detail, figures 10 and 11 illustrate the following features. A secure applet (e.g. DLTapplet) on the SIM (within a device) or on the node generates and holds keys securely. These keys may be representation of wallet(s), certificates and/or other modes of digital trust used for the secure exchange of value (using a blockchain). The secure applet may be logically an extension of a home subscriber server's (HSS) hardware secure module (an existing network element deep in the core network of a telecommunications company or operator). The HSS relationship with the secure applet on the SIM may be managed by another existing network element (e.g. an over the air OTA server), which may be a machine used to create a secure communication channel directly with the SIM. The telco node plays the role of a DLT notary, acting in governance with a decentralised authority in each of the DAB nodes to create and manage certificates needed to manage a lifecycle of the secure application distribution, update, permissions and decommissioning activities, for example.

The telco node also acts as the CA (certification authority) for services provided by the system (e.g. DLTsecure services). As the HSS's hardened security is extended to the SIM via the DLTsecure services, the DAB DLT uses the SIM and stored keys to create a new consensus protocol ("Proof of Secure SIM"), where the SIM is asked to prove its validity on the system (DAB) upon each transaction, without the need for expensive, high processing proof-of-work/stake type processing across the network. This makes each DAB node lightweight, as well as limits computation requirements for the SIM (as the PUB/PRV keys may be generated asynchronously then offered to the DAB DLT for validation at the point of transaction initiation.

Device owners or other entities may program or define smart contracts or other conditions so that heterogeneous devices from different systems can interact with each other using a common root of trust (i.e. the SIM and secure applet or GBA enabled device). This provides a mechanism and protocol allowing devices to interact. This may be done at scale with multiple devices (and their SIMs) interacting with one or more nodes. This protocol allows for devices to exchange tokens-to-tokens, as well and exchange token-for-data, a use case that has been traditionally resolved using APIs. Furthermore, devices enabled in this way (DAB devices) may autonomously exchange tokens in their one or more wallets for value, ranging from action (e.g. access control) to data streams (e.g. device location), with secondary "parent" nodes being able to recharge these wallets to manage and track service consumption, for example. This system provides a micropayment and micro billing system as well as a request/transfer/settlement of value exchange that may be coupled with the credit/debit of a decentralised ledger.

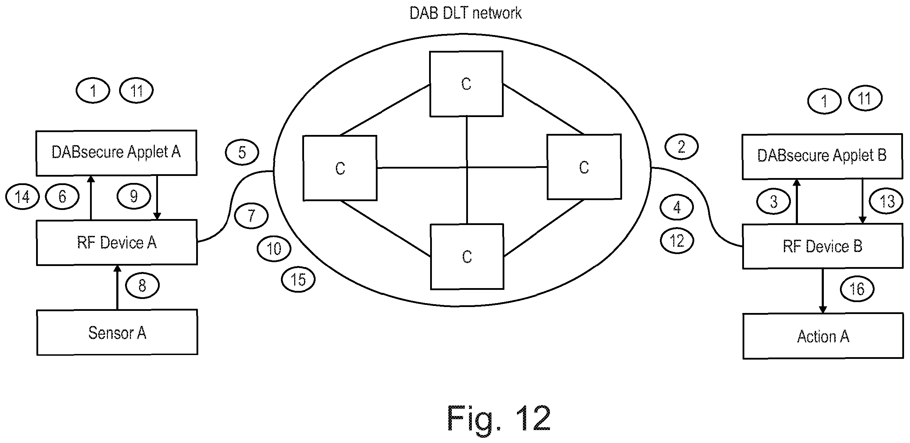

The following describes the steps taken when operating the example network arrangement of figure 10. The numbers below correspond with the numbers shown in figure 12 indicating method steps occurring between different components. Again, either encryption scheme (symmetric or asymmetric) may be used:
0. Background: A & B haves been registered on the DAB NW and have been permissioned to exchange value to each other.
1. Owners of A & B have agreed a smart contract (i.e. "if you give me data X, I will give you Y tokens")
2. B requests data from A based on pre-determined smart contract (C)
3. B's request is signed with DLTsecure B security, and validated by Dapp C (Proof-of-secure-SIM)
4. "Buy" transaction is published on behalf of B on DAB DLT network
5. A downloads applicable requests for transaction determination
6. DLTsecure A verifys request (4)
7. Device A signals to DAB DLT that it wants to "Sell"
8. Device A receives & packages Data A from Sensor A
9. DLTsecure A signs package A
10. A acknowledges exchange on DLT calling upon Smart Contract C to be invoked
11. A sends package A to B (either on or off chain)
12. DLTsecure B updates DLT, DLT records and initiates settlement using Smart Contract C
13. Device B fulfils C
14. Device A confirms token receipt
15. DLT validates C closure
16. Device B analyses package A, makes determination to conduct Action A

The next two sections provide details on how the two implementations operate in more detail.

The UICC applet implementation uses a secure element within the UICC (e.g. SIM). The SIM acts as a hardware wallet protecting cryptographic keys and communications. This implementation enables a SIM to provide a Root of Trust for IoT devices for easy and efficient implementation of key security features. The SIM may securely store transaction signing keys and performing crypto asset transaction signing securely within a secure environment.

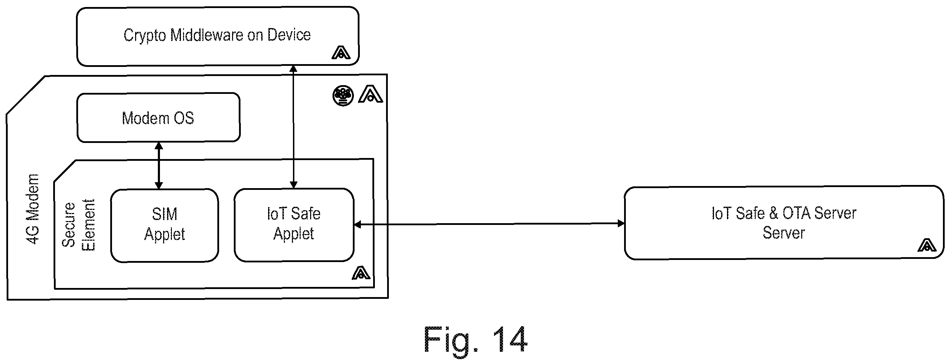

Figure 14 illustrates a schematic diagram of an architectural design of the SIM and an OTA server. SIMs may be provided with a GSMA loT SAFE applet. In addition to holding the SIM Crypto Wallet for transaction signing, this enables mutually authenticated TLS connections that are bound to SIM Hardware Root of Trust as defined in GSMA Specification https://www.asma.com/iot/wp-content/uploads/2019/12/IoT.05-v1-IoT-Security-Applet-Interface-Description.pdf.

GSMA loT SAFE based solutions provide Chip-to-cloud security for loT deployments. Using a hardware secure element, or 'Root of Trust', IoT SAFE based solutions provide end-to-end security. The usage of the GSMA standardized secure element and loT SAFE Applet additionally ensures interoperability across different enterprises and consistent use by loT device manufacturers.

For communication between the loT SAFE Applet, which is located on the SIM, and external parties (e.g. a proxy server, blockchains, etc.), Crypto Middleware libraries are also executed within the device but not necessarily within the SIM.

In this implementation, standard authentication mechanisms occur between the SIM and the device as well as between the SIM and an Over-the-Air (OTA) Server. These mechanisms may also involve a secure element on the SIM. This is joined by basic mechanisms to unlock an application and/or the SIM (e.g. by using PIN protection), SIM lock mechanisms, mutual authentication between SIM and device application, etc. Blockchain transactions are validated by blockchain nodes using protocols that include digital signatures sent as part of the transaction.

### Generic Smart SIM Wallet

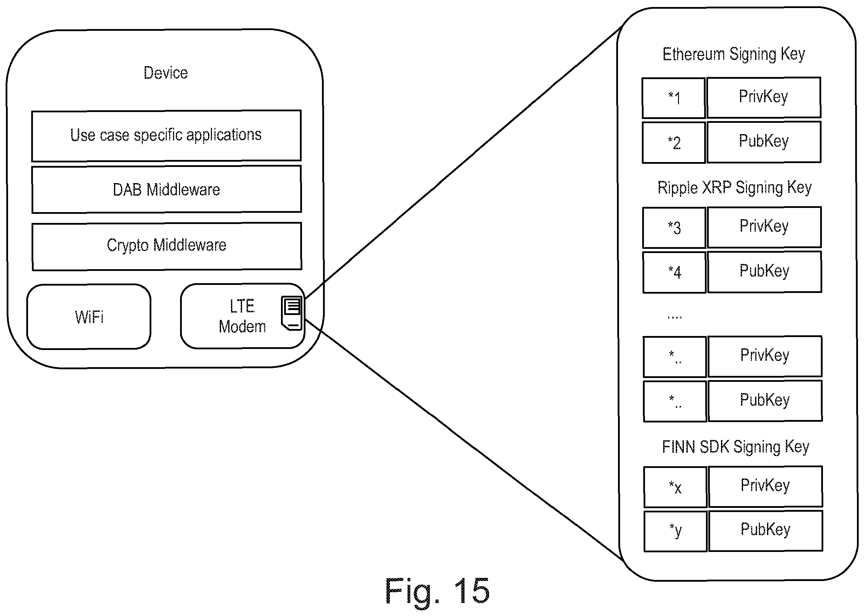

By using the loT SAFE Applet, the SIM provides access to one or more key containers or storage locations within the Secure Element of the SIM. These containers may be used for different use cases or even to providing multiple identities for the same use case or operation. Figure 15 illustrates schematically the storage of multiple identities within the SIM. Each identity may used be as a SIM Wallet that enables a user to authenticate and sign transactions against within different applications. This is not limited to blockchains but may also be used within off-chain mechanisms such as traditional payment rails (e.g. direct communications with other devices or enterprises). Over the air (OTA) update capability of the SIM enables the addition of new containers and key management functions for use in particular implementations.

SIMs can be personalized with additional key containers to sign keys for different blockchain networks. In a preferred implementation, there are three key containers available by default in the SIM. Two containers holding SECP256 K1 ECDSA key pairs and one holding SECP256 R1 ECDSA key pair. However, different key pair types may be used and in any combination.

Considering an end to end solution, a SIM crypto wallet in an loT (or other) device and using SIM as hardware Root of Trust may provide any or all of the following features:
▪ Hardware wallet (signing payment/digital asset transfer transactions)
▪ Verifying signed transactions
▪ Secure communications
▪ Secure storage of sensitive data

The SIM itself thereby could provide any or all of the following capabilities
▪ Additional crypto capabilities
▪ loT device ID metadata storage
▪ Secure Backup / Restore, Key Management
▪ Device initiated bootstrap

Using a cryptographic key vault within the SIM keeps the private keys and secrets tamper proof and secure. SIMs are generally tamper proof hardware with a dedicated crypto processor and a highly secured SIM OS, providing the level of assurance required to private keys safe. Keys stored on the SIM in this way, are generated on the SIM and preferably never leave the SIM.

Table 1 summarizes the list of preferable crypto algorithms that are used. Other algorithms may be used.

**Table 1**

| Blockchain / Crypto Network | Public & Private Key Crypto Transaction Signing Algorithms |
|---|---|
| Bitcoin | ECDSA SECP256k1 |
| Bitcoin Cash | ECDSA SECP256k1 |
| Ethereum | ECDSA SECP256k1 |
| Ripple | ECDSA SECP256k1 |
| R3 Corda | ECDSA SECP256k1 / R1, RSA (3072), EdDSA using the ed25519 and SPHINCS-256 (experimental, post |
| Hyperledger Fabric | ECDSA / RSA |

Blockchain and crypto currency networks typically rely on asymmetric cryptography because their transactions are peer-to-peer or within a group of participants. The list of participants amongst different transactions may be different. Given this peer-to-peer nature of blockchain transactions, the usage of Symmetric Cryptography may not be feasible. Additionally, using Asymmetric Cryptography, blockchain and DLT transactions are auditable by third parties. The use of PKI within the current system makes it is possible for an entity or person to verify a transaction without having access to the private keys.

### EMV tokens

EMV is abbreviation for Eurocard (RTM), MasterCard (RTM), Visa (RTM) and stands for a defined specification for payment applications and implemented in most of today's banking card chips. It works with symmetric cryptography by accessing securely stored authentication information on a banking card chip. In the present environment, EMV may be used to sign payment transactions and send them to existing payment rails to enable transactions. Therefore, the SIM Wallet will be used to hold (symmetric) key values for payment applications, which are then used by device middleware and facilitate EMV payment through the present system.

In this enhanced or optional feature (used with any of the described implementations), this provides an option for a user to select to pay using a blockchain or existing payment rails by EMV. From a security perspective, SIM cards are already able to pass banking card certifications.

### Wallet of wallets

The SIM is used to provide keys relating to a desired payment method. The wallet itself that is used for payment does not need to be stored on the SIM (but may be). The wallets used to interact directly with the distributed ledger may be provided by a separate entity, server or proxy server, or broker (e.g. DAB) and selected based on payment method preferences dependent on the particular use case.

Third party documents may be deployed onto the SIM over-the-air (OTA). The wallet application on the device securely interacts with the SIM part of the application (applet) and establish a binding (also via OTA). This follows a Security and Certification process for the Security Domain as well as approval for integration with external applications.

### Key Management

A well-defined mechanism to manage the lifecycle of keys used in transaction management may be implemented. Lifecycle management of cryptographic keys includes key backup, restore, key revocation and renewal and may implement security policies to handle lost, stolen and/or compromised devices. Private keys are the most sensitive asset, and are not backed up in clear or unprotected environments. For backup and restore of transaction signing keys for blockchain, there are a number of different mechanisms that are used.

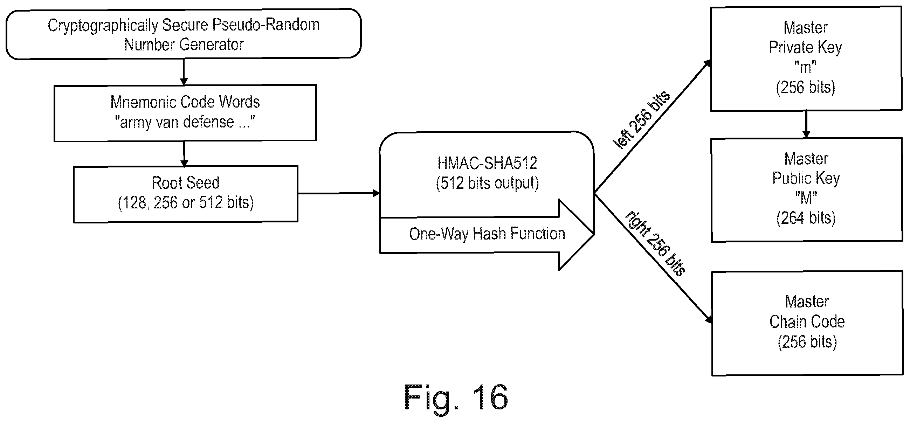

For example, Bitcoin defines deterministic key generation based on a human readable series of words to generate a seed and generate key pairs using the seed based on the BIP39/BIP32 specification. BIP 39 implementation specifies deriving the keys from a mnemonic that may be remembered and re-entered in order to restore the keys. BIP32 defines hierarchical deterministic wallets, which derives keys based on a seed and an index value. Such mechanisms may be used in the present system and is illustrated schematically in figure 16.

In another example implementation, a SIM Backup Vault Service backs up components or parts of private keys on other SIMs in a transparent way so that no single SIM has the complete value. Restoring a key can be a collaborative effort involving the collection of components of backed-up values (k out of N) from a cluster of SIMs that were used in the backup process.

In a further example implementation, a blockchain smart contract based solution reduces the complexity of the backup and restore process. For example, a smart contract account holds the digital asset similar to an escrow mechanism, until specified conditions are met. Accounts associated with loT devices would only deal with micro payments and would not hold any digital value or crypto currency on their own. Smart contract accounts can define the rules for resolving the scenarios in which some devices are faulty and how to transfer the account to some other device, for example.

### Generic Bootstrapping Architecture (GBA)

The Vodafone SIM Trust architecture based on Technical Specification (3GPP TS 33 220) also known as the Generic Bootstrapping Architecture (GBA). As with certificates, GBA is used to establish trust between parties. Whereas certificates rely on asymmetric cryptography to create key pairs that are different and that can be used in conjunction with each other to support cryptographic functions. GBA uses a hardware based Trusted Execution Environment (TEE) to store symmetric keys and to provide functions to use these symmetric keys to derive temporary keys that can be used to support at least three functions: Authentication, Confidentiality Protection and Integrity protection. More details on the GBA Standard can be found in ETSI Technical Specification TS 33.221 V14.0 (2017-05).

In the loT environment the GBA TEE is provided by the SIM. The SIM is used to store credentials to support authentication key derivation and key agreement functions.

Symmetric encryption suffers from the disadvantage of requiring keys to be distributed and shared between all parties that need to communicate with each other. This is referred to as the Key Distribution Problem. The Telecommunications Industry relies on Symmetric cryptography where the keys are distributed during the SIM manufacturing process and where symmetric keys are stored in two places:
1. Subscriber Identity Modules (SIM) which are hardware token devices that are stored on the User Equipment (UE) which might be a mobile phone or an IoT device; and
2. Centrally in the Operators core network on an Authentication Centre (AuC) and accessed via a Home Location Register (HLR).

The security of this distribution process relies on secure processes being followed by the SIM manufacturer and the Cellular Operator in the management of this key material.

However, a number of entities have been know to target the processes and the people involved in the distribution of this key material. Industries relying on SIMs to secure their assets have countered this Key distribution attack problem by using rigorous security processes and vendor selection. However, this can be costly.

### Communication Flow

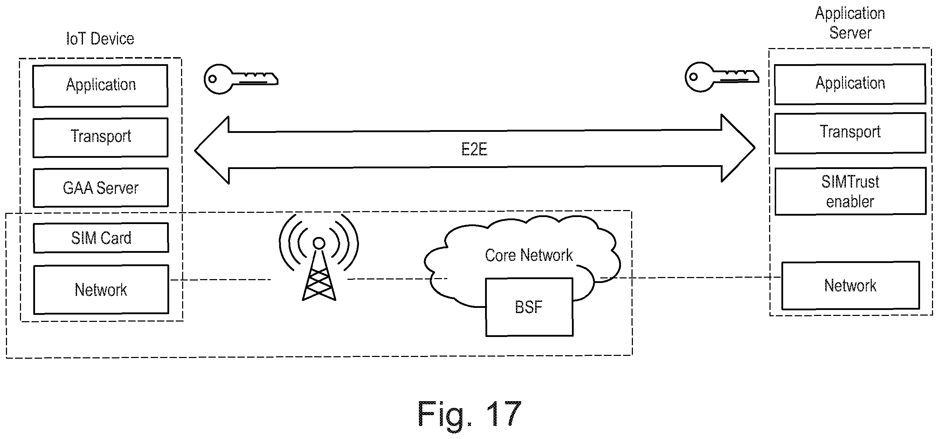

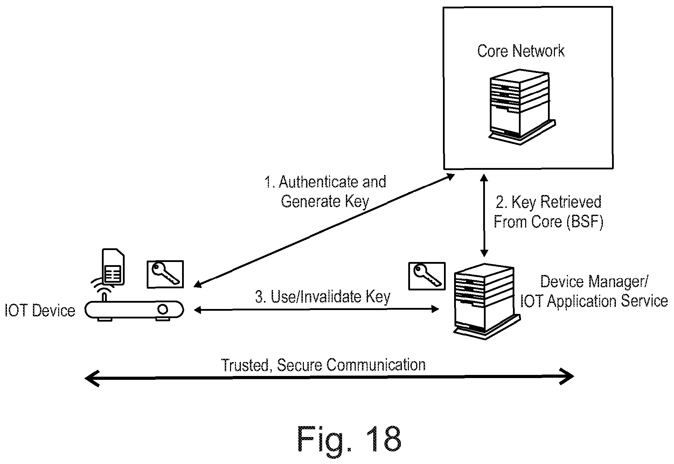

The SIM card is used as a root of trust to derive shared keys which can be used to achieve end to end authentication and encryption at the application layer at scale. In general, this process relies on the 3G AKA process (AKA = Authentication & Key Agreement). The AKA process is used when any mobile device attaches to a mobile network (>2G) and performs mutual authentication and key agreement. Figures 17 and 18 show at a high level, the communication flow used for the SIM Trust implementation of GBA.

The steps for establishing a secure channel between the device and a backend applications consist of two steps: Key generation and Exchange data through the secure channel using the key.

### Key Generation Process

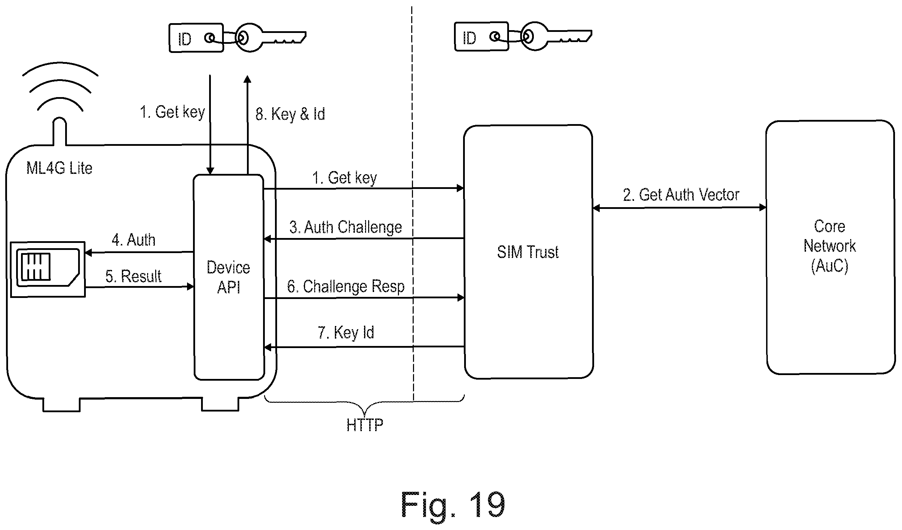

The key generation process is shown schematically in figure 19. The SIM interacts with a device API within the device, which obtains the symmetric key from the SIM Trust server in communication the core network. The device communicates with the SIM Trust server over http to derive the shared secret in the form of the symmetric key. This symmetric key is stored authenticated and stored within the SIM.

### Exchange data through the secure channel using the key

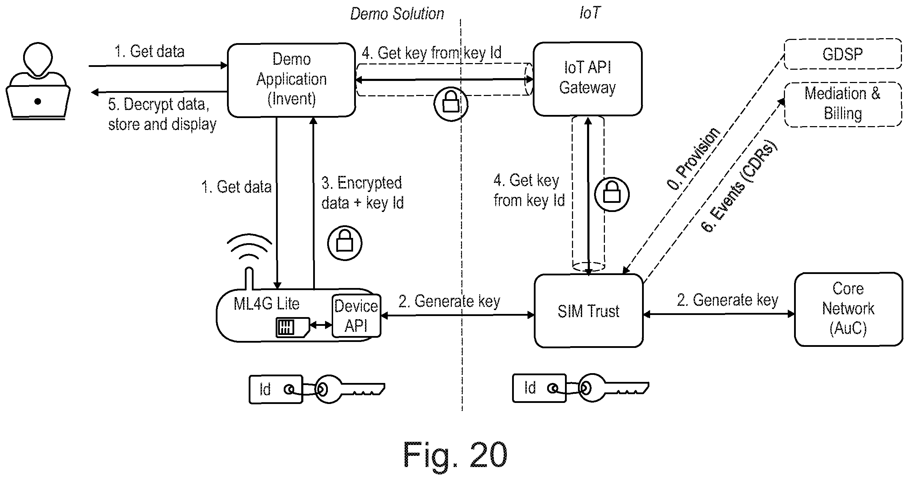

Once the shared secret (symmetric key) has been derived, it may be used to secure a channel to communicate data. This is shown schematically in figure 20.

The Communication Flow through each network entity is described below:
The Device Management (DM) Client queries the Generic Authentication Architecture (GAA) Server for a key.
GAA Server establishes identity of SIM (AT+CSIM).
Meanwhile, GAA Server tells the DM Client to wait.
The DM Client can handle other work whilst waiting.
The GAA Server asks the UbProxy for an Authentication Vector using the identity. UbProxy validates the request and routes it to the correct Bootstrapping Server Function (BSF).
BSF request the AV from the HLR.
HLR returns an AV to the BSF.
BSF stores credentials and returns a version of vector to the UbProxy with 401 code. UbProxy returns same message and error code to GAA Server.
Which requests an authentication from the SIM.
A valid response (DB at the start) allows a valid response to be extracted and sent to the UbProxy.
Which then sends it to the BSF.
Which validates the response included in the message against that received from the HLR earlier and sends a 200 response.
UbProxy returns the 200 response to GAA Server.
GAA Server calculates the key and returns it to DM Client.
DM Client now uses the key as required and passes the Id to its server.
When DM Server needs the key it queries the UbProxy via the NAF using the Id.
The UbProxy sends the key request to the appropriate BSF.
Which calculates the key and returns it.
UbProxy returns key to DM Server.
DM Server uses key as necessary.

Starting from the SIM Trust (e.g. from Vodafone), middleware on the device side enables the device to message between the SIM and SIM Trust platform (bootstrapping server function, BSF) in the network. The device supports SIM Trust Device Libraries and have integrated software libraries (DDK). On the backend side an application retrieves the shared key from the SIM Trust platform using an application processing interface (API) call via an API Hub.

A particular global data service platform (GSDP) may enable GBA (e.g. SIM Trust) for particular SIM cards or IMSI ranges.

### Device

Generic architecture

For using the device as an integrator layer between SIM and DAB, four interlinked components can exemplarily be provided:
SIM Centric: a SIM card (including a secure element and a hardware component that stores cryptographic keys and that can authenticate and sign transactions and data).

Libraries provided by the SIM manufacturer: a set of libraries exposing the SIM's functionalities for use by connected applications (e.g. Crypto Middleware mentioned).

Middleware: Middleware component that exposes the SIM applet infrastructure capabilities for applications that are unable to directly embed the SIM manufacturer's libraries, or for applications and devices running outside the device (e.g. a data gathering network).

Events Detection: application(s) / algorithm(s) that detect and transact events either with the rest of the DAB Service, or directly with blockchains and marketplaces and/or exchanges.

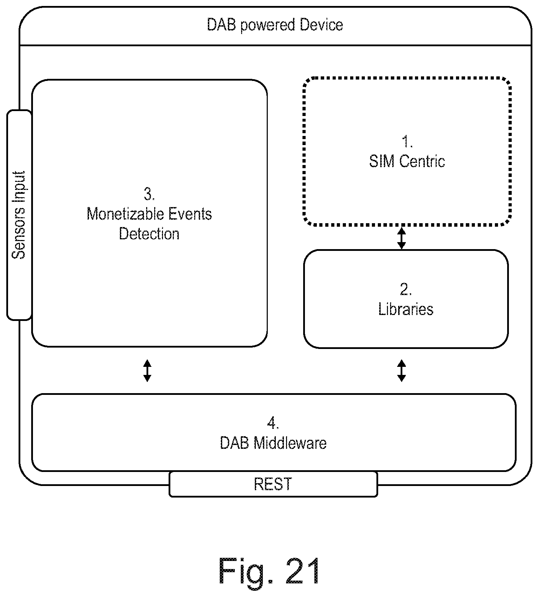

These components are shown schematically in figure 21.

Together with the Services, and the use of existing capabilities like GDSP (Vodafone's Global Data Service Platform for managed loT Connectivity), SIM Trust or loT SAFE, devices can be seen as edge integration points, fulfilling the functions of blockchain wallet and trusted authenticator. They also open up the ability to provide secure autonomous events, or to be used as simple Hardware Secure Modules (HSM).

The Middleware enables devices to smoothly participate in a transaction ecosystem, enabling applications to embed manufacturer libraries and consume SIM capabilities for key provisioning and transaction signing. Applications running outside the connected device can also access the Middleware through its APIs, making use of these capabilities.

Devices process or gather data ranging from direct readings to computed analytics (e.g. cargo occupancy assessments) , that (in the PKI on SIM case), once encrypted and signed with the SIM Cards' private keys, can be tokenized into any blockchain or stored elsewhere within the platform for cross-vertical usage.

### Middleware for Secure Element on SIM

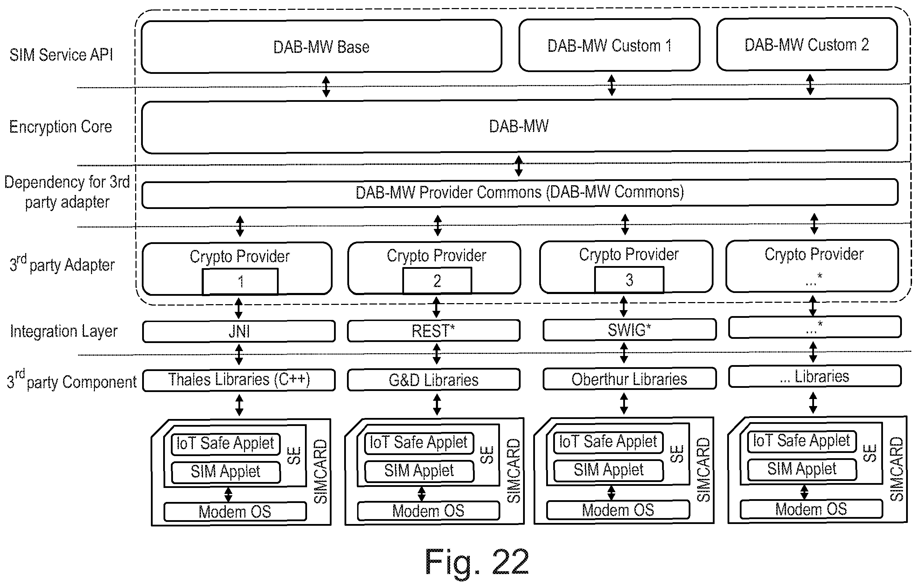

Typical loT deployments such as those shown in figure 22 may benefit directly from GSMA loT SAFE providing secure transfer of sensitive data and device authentication. Nevertheless, it requires the mentioned middleware on the device to facilitate communication between the SIM Applet and the application side.

### Architecture

The Middleware for Secure Element on SIM abstracts dissimilar types of applet management through a modular application, enabling the integration of devices and a digital asset broker (DAB) Service platform. It provides a unified single RESTful API (the SIM Service API) for applet management, regardless of manufacturer.

In order to expose SIM capabilities to devices, a Crypto Middleware library provides and interface with an applet execution platform. The libraries may include OS-level C libraries and/or framework-ready modules for Java, Android or Swift, and provide methods for managing the applets themselves (deployment, deletion, updating, etc.), as well as the operations made available by each. The DAB Middleware components are outlined in figure 22.

The SIM Service API is a set of base endpoints that expose the unified operations described previously and for each received request, the Encryption Core is responsible for orchestrating the necessary steps for interacting with third-party vendor integration options, be they external or embedded Java libraries, for example. Since each of those come with their own logic flows for applet management and utilization, individual adapter components may be interfaced by a DAB Middleware Provider Commons layer. This enables operations provided by different manufacturers to be available.

### Implementation

In an example implementation, two device configurations aligned with the loT SAFE applet running inside Secure Element of the SIM cards are provided:
1. DAB App running on a mobile phone directly accesses its SIM card through an embedded Android library for signing and validating datasets as instructed by the DAB Service; and
2. A 4G-connected automotive M2M router (in a test, simulated using a RaspberryPi and a Vodafone USB Connect 4G v2 dongle but other suitable hardware may be used) contains the SIM but exposes its cryptographic capabilities to other applications through the DAB Middleware.

The implemented DAB Middleware use the following example technologies:
Spring Boot;
OpenAPI;
Java Native Interface (JNI); and
iot-safe-middleware. Other technologies may be used.

In one example implementation Java Spring Boot covers a large number of possible integration scenarios with manufacturer libraries. This also opens the possibility to include it in several kinds of devices, including smart devices or loT Gateways, as long as they can run JVMs. For low end devices where CPU and Memory may be constrained, using a JVM is not the most efficient implementation but it does abstract away hardware differences.

This may be split into configurable modules that can be extended for each supplied library, an approach taken for providing easier integration of integrations methods, either by directly importing code modules, or by interacting with OS-level libraries (when e.g. C libraries provided by the SIM manufacturer need to be interfaced by way of a JNI foreign function interface). This may be instantiated as a standalone application running on the same device connected to a communications unit or it may be embedded on the event detection software (if Java-based, for example).

Four example SIM Service operations may be defined, which are concerned with the cryptographic capabilities made available by the loT SAFE applet installed in the SIM. These operations mirror very similar signatures of the API methods made available by the Thales Crypto Middleware C++ library (see also https://github.com/ThalesGroup/iot-safe-middleware). The Crypto Middleware library provided by Thales can in itself be used in two ways or compilations: the Java Android library for direct applet communication from inside a regular Android app, or the C++ build, suited for the middleware approach described above.

### DAB Middleware APIs

In an example implementation, the SIM Service operations concerning cryptographic capabilities made available by the loT SAFE applet installed in the SIM are called by applications according to their need to get a public key or sign a message. They all follow the "container"-based approach ("containers" are secure memory spaces holding each a client certificate and a key pair), and each deployed DAB use case may be aware of which key type or digital signature algorithm it requires. Therefore, it may also be aware of which parameters/containers to use when calling the DAB Middleware.

In an example, the API may be briefly summarized as such:
/containers: for listing information about a SIM's containers;
/certificate: for retrieving the client certificate of a particular container;
/pubkey: for read the public key of a particular client certificate/container; and
/sign: to sign a message using a particular client certificate/container.

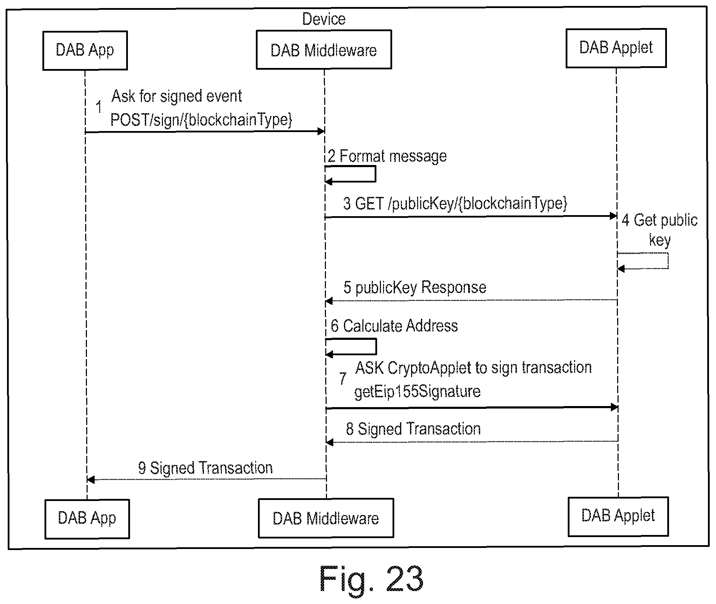

This business logic is shown in figure 23.

### Applications

### Transaction Signing using SIM Wallet

Blockchain, Crypto currency networks and other micro payment solutions rely on ability of nodes to sign transactions. Due to this peer to peer nature of these transactions, it is important to be able to prove that node participated in the transaction to ensure non-repudiation. Keeping the private key associated with a Blockchain address in a safe location (ideally, tamper proof crypto module) is therefore critical.

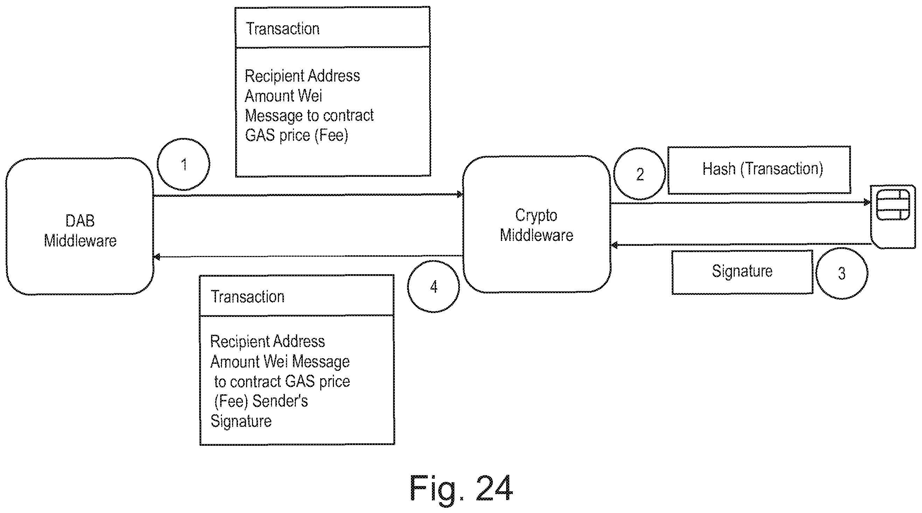

A transaction prepared by DAB Middleware is signed using private key securely stored on the SIM. An example of this is shown schematically in figure 24.

### TLS authentication

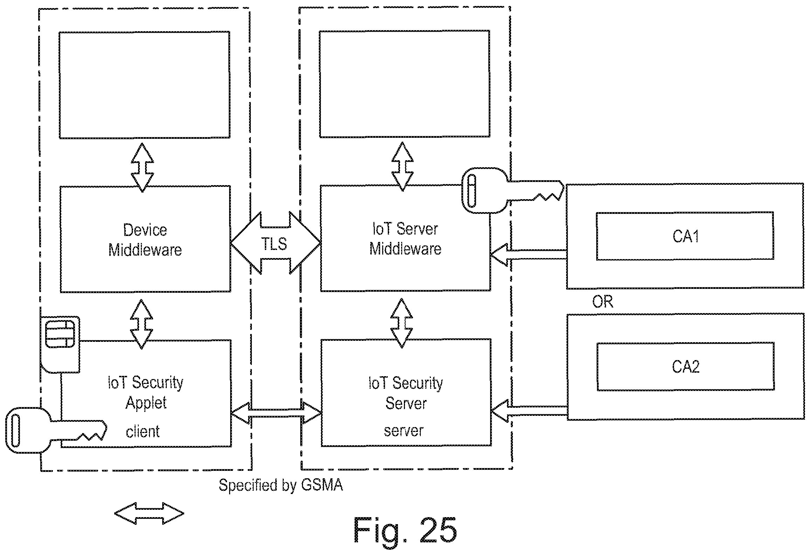

Client Keys and Server Root Certificates securely stored on the SIM (e.g. an loT SAFE SIM) can be used not only to support DAB blockchain applications but also to perform mutually authenticated TLS session between the device and a service running in cloud. This is shown schematically in figure 25.

The DAB Middleware may also deliver control over key generation, wallet administration, and the management (installing, deletion, etc.) of applets installed on the SIM. This may entail, e.g., exposing control over the loT SAFE applet to generate new key pairs or modify digital signature algorithms.

Due to the diversity of SIM and Devices manufacturers, the DAB Middleware is available as a software development kit (SDK) for multiple languages and operating systems, making it possible for OEMs to smoothly embed it into their own devices. Given its Java-based nature, another option includes porting it into the Java Card technology delivering a single application that may be preinstalled in all SIMs for out-of-the-box DAB accessibility.

The SIM Service API is available at the DAB API Inventory for direct device management by application accelerators or third-party applications connected to the DAB platform (if authorized to do so). Preferably, this may be consumed by each DAB Service instance for controlling the devices transacting in its own use cases.

### Sensor Data Extraction for Event Detection

In an example implementation, IoT deployments may use devices as end nodes, which can have various functions. These can include:
Directly forwarding sensor data to upper layers (cloud or server); or
Communicate with a gateway that performs the same function.
The sensor data may originate within the device, for example.

Smart devices and secure elements are increasingly prevalent, the ability to extract knowledge or generate actions upon the resulting data is becoming a key to loT autonomy. The ability to authenticate datasets, applications running detection algorithms may directly embed compatible libraries for accessing the SIM cryptographic applet or use the DAB Middleware to sign the information with a selectable private key, leading to an unalterable dataset.

The DAB device may also act as a control point for the deployment of device-side capabilities that can come into play on DAB-powered use cases (such as detection algorithms deployment, wallet management, etc.). DAB-powered devices may be accessible for the DAB Service to manage their detection software and SIM applets.

### DAB Framework

In an example implementation, the DAB Service is the instantiated component for a DAB stack and acts as the transaction and authentication platform for a DAB ecosystem. It provides capabilities for IoT devices to transact value for services/data and handles connectivity between mobile loT devices, multiple types of blockchain technologies, and any third-party external systems. For this, the DAB Service may offer REST-based APIs for the setup of use case orchestrations, for transaction committal, digital identity management and third-party service access.

Preferably, the system use the Java Spring Boot framework. This enables modularity capable of running in most on-premises or cloud-based machines. This is also a flexible environment for interconnection with different kinds of software and hardware applications, be they libraries, drivers and communication stacks. However, other frameworks may be used.

In an example implementation, the DAB Service may use the following technologies:
Spring Boot, Web3J, OpenAPI, Firebase Java SDK, Spring Quartz, Liquibase, Failsafe SDK, JJWT lib, Paho MQTT, PostgreSQL 10, and/or Spring Reactor.

### Role inside the ecosystem

DAB Service is the engine of the ecosystem, managing devices, use cases, flows and entities. In addition to all capabilities exposed through the APIs, the DAB service integrates external systems from third party marketplaces, other telecommunications components or additional blockchains networks.

Beside the connection to networks, devices are managed and accessed, with the DAB Service the connecting, managing, authenticating and certifying devices. If an external entity (e.g. company) wants to join the ecosystem, then it may use the DAB Service - "as a service". If another entity wants to have more control around the devices, an instance of DAB service can be deployed for specific use with their own devices and control their own pieces of the ecosystem.

IoT devices may act as sensors or low-energy devices with a low computational power. Furthermore, devices do not need to be connected every time and it is not necessary to connect to a distributed ledger (e.g. blockchain) or other type of network all of the time. To reduce the computational burden of devices, the DAB service may acts as a proxy (or proxy server) to connect devices with any kind of network. This reduces the weight of processing data from devices, allowing the less powerful devices to be part of the ecosystem.

### DAB Management Core

A DAB Management Core acts as a main communication layer between all the parties, consisting of a flow orchestration engine and an API component. The flow orchestration engine consists of three components. Each component is accessible through APIs.

### Flow Orchestration Engine

A Provisioning Engine is responsible for handling both the setup and management of the use cases instantiated in each DAB Service instance, abstracting the linking up of use cases with particular implementations or technologies. Additionally, the provisioning engine handles the configuration of these technologies and third-party services. It delivers an access layer for the management of devices participating in the DAB stack for deploying algorithms and key management (via SIM Service API). Following functionality is handled in this component:
Business Rules: A set of rules that define the interactions that each device can have with a certain network or marketplace / exchange.
Use Cases Management: Management (creation, edition and deleting) of available use cases for each DAB instance. It is also responsible for provisioning on devices the usable use cases that they can trigger.
Connectivity: Integration with other platforms like GDSP for SIM management, location services, etc.
Algorithms: Governing, cataloguing and deploying of algorithms into DAB-powered devices leveraging the SIM Service API. This capability provides a high level of customization and possibilities on the devices preferably upgraded over the air so that they can discover new events based on their own data, without the data leaving the device.

### Authentication Engine

An Authentication Engine is responsible for handling all digital identity logic for connected devices and created smart services. Entities ranging from devices, to Partners or Services have a Digital Identity that can be used to pair and connect businesses (managing what is accessible to each other at a given time). Therefore, this engine offers the ability to create loT devices entities within a network of external back ends and authenticate against the respective registry. Therefore, the authentication engine univocally asserts identities across the DAB ecosystem, preferably by way of a unique identifier. Devices holding provisioned keys and as such, providing context on identity and transaction authenticity, can be authorized to plugin and provide data with proven and provable provenance.

### Transaction Engine

Depending on the use case, different functionalities can be activated, and this customisation is an additional benefit of the DAB platform. Authenticating devices in this way assures that received transactions are encrypted and signed from a trusted device i.e., through the SIM card's private keys, making sure of provenance and identity. Therefore, transactions can immediately be performed on multiple marketplaces/exchanges (normally, each focused on specific domains).

As such, the Transaction Engine may be responsible for handling logic tending to the processing of received device transactions and API calls. This requires redirecting information across DAB Service layers and making inter-component requests. For example, this can include accessing databases, external systems, or the blockchain integration. On receiving a candidate event, the DAB Service may decide which use case to apply depending on more than the contained data and may check for algorithms chosen at the device or insights produced over those data.

In cases where transactions require "long" processes or a marketplace-type offer/demand matching procedure, the Transaction Engine provides interfaces to the DAB Management Services off-chain processing component that provides services to run special algorithms in secure CPU enclaves. This may include services controlled by the DAB Service or by a third party.

The Transactions Engine provides ingress endpoints where datasets enter the DAB stack. These may be delivered by synchronous HTTP POSTs to DAB (or other communication protocols) which parses and routes them to an applicable use case, initiating the (configured) orchestrated flow associated with it.

A typical value transaction process may follows three steps. These may be applicable to most use cases and show how a use case implementation is approached:
A received message triggers the start of a value transaction process. For example, this may be a transaction sent by a DAB-powered device (see Transactions Engine), or a specific message received on a Custom API deployed by the DAB Service for third-party consumption.

The producer's identity is validated, and the activated use case identified. A resulting action is produced, such as deploying a transaction in a blockchain or delivering a message or signal to an external system or DAB device.

Applications may cover several sorts of use cases that go beyond simple token transference, such as the concepts of session recording and dataset matching that arise as viable practical applications for commercial use. In order to generalize the many types of data that may be transacted, the Transactions Engine may enforce an API message format that is outlined to be as much generic as possible so as to contain all information needed to indicate which use case flow to activate.

In an example implementation, example JSON code is shown below. The message properties may indicate:
transactionld - a UUID generated by devices and unique for each message;
usecaseType - should univocally identify both the blockchain technology to be used, plus the operational mode of the use case (e.g. Ethereum, session-based, etc.);
transactionType - used by all use cases but limited to the keywords needed to describe each step of the that operational mode (e.g. Start session, open session, Pay);
fromDevice - the SSID - a globally unique identification code for each SIM - used for device identification;
creationDate - timestamp generated by the device;
transactionObject - contains the data to be inserted into a blockchain (blockchainObject), along with a "locationObject" property that carries GPS data sent by the device indicating its present location;
dataType - used to indicate the type of data to be inserted to the blockchain (the data contained inside the "blockchainObject"). This could be used to discriminate its JSON format.

```
 {
  "transactionld":"{{v4uuid}}",
  "transactionType": "newdata",
  "fromDevice": "8981300999090900006F",
  "creationDate": "2020-04-27T17:32:47.020154Z",
  "useCaseType": "service",
  "dataType": "generaldata",
  "transactionObject": {
     "blockchainObject": "{\"borrower\":\"Daimler\",...}",
     "locationObject": "{\"location_data\":{\"lat\":51...}}" }
     }
```

### Supportive Functions, e.g. Data Persistence Service

A Data Persistence Service deals with all the database connectivity the DAB Service needs for storing information describing use cases orchestrations, device configurations, device-service association data, and dataset hashes. It may be used especially when timing becomes critical.

The functionalities of DAB Management Core may also be supported by a Platform GUI. This may be implemented through INVENT but may use other technologies.

### Common APIs

The Flow Orchestration Engine may requires a set of Common APIs of core functionalities to provide endpoints suitable for building and managing use cases, authentications and transactions.

### DAB Management Services

The DAB Management Services functionality serves as the place where customized data processing related to a certain industry vertical or use case may be implemented. It may be independent of the DAB Management Core and have its own APIs that can be defined and developed any time a need arises to integrate third-party services for DAB interaction. To improve scalability, core elements may be independent of customized elements.

### Customized Off-Chain Processing

In cases where transactions require matching processing (e.g. Truck Capacity) or in case of micro-payments aggregation (e.g. Tolling Services), algorithms may be run in Python and in a software guard extensions (SGX) enclave.

### Customized APIs

When a specific integration is required for a use case to be triggered by an external system, the endpoints exposed by the DAB Service may be organized in this component. These use cases generally depend on data already present in the DAB stack, such as querying the DAB for a digital device identity, requesting a signature, or triggering a blockchain transaction, for example. These bespoke control points can go beyond REST and be made available in any other technology supported by Java, such as SOAP, MQTT, etc..

### DAB Blockchain Services

### Ledger of Things

The Ledger of Things provides the ability to create, maintain and use digital IDs based on a Corda network, for example (other distributed ledger technology may be used). This will be then consumed by DAB Management Core for authentication and transaction signing. Bulk provisioning of Devices on the Ledger of Things allows enterprises to easily and simultaneously create the digital twin of a large number of their devices. A DAB Exchange includes event detection will be a key differentiator to map devices and use cases to each other automatically.

### Blockchain Hub and Smart Contract Engine

### Blockchain Hub

A Blockchain Hub governs the different integration mechanisms chosen by blockchain implementations, providing the DAB Core services with interconnection capability. These mechanisms may range from the use of embedded Java libraries, to system level interactions with external applications running alongside the DAB Service itself. Therefore, a layer provides different classes that segregate by technology or partner all logic needed for their use. When building a use case (via the Provisioning Engine), a programmer expects to easily select one of these connectors, configure it to use a particular node, server, or credentials, and be provided with simple methods for transaction management.

Different types of distributed ledgers may be used. For example the following three different blockchain may be used:
In Corda networks, transactions are made via RESTful API with several nodes of the DLT network. It would be also possible to use RPC connectors, but RESTful API offer a low friction and easy integration.

In iExec networks, successive operating system processes are run, where a set of ordered commands (as described in the partner's documentation), are issued to a NodeJS client (iExec SDK), installed side-by-side with a DAB instance, that synchronously executes and returns textual JSON outputs that need to be processed and interpreted by the DAB.

EWF built a system that uses an Ethereum blockchain as a data marketplace, but having in view device participation being limited to "dumb" devices that only receive MQTT messages. Therefore, for integrating their EWF into the DAB Service, a MQTT client / connector manages all EWF flows for all devices that the DAB Service authorizes.

Given the complexity of existing blockchain implementations it is possible to integrate further connectors based on libraries such as Geth and Web3 to enhance fine-grained connectivity options.

### Example Use Cases

### Use Case: "Services Payments"

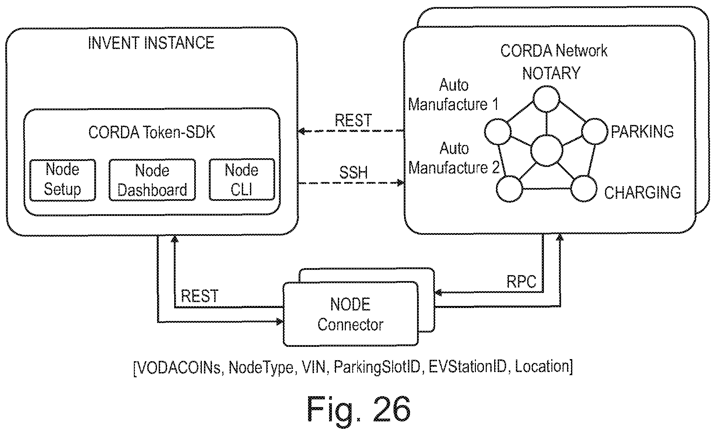

This use case demonstrates how token exchanges can be used to use and pay for services like Parking or Tolls (automotive). R3 Corda technology implements a token SDK framework to create a one-time token/payment transaction. Five nodes within a network include one notary acting as an authority node, two nodes for services and two nodes for consumers. Each node on the R3 Corda blockchain represents major entities, like service companies (e.g. parking, tolls companies or EV-Charging providers), and consumer companies, like automotive companies. Each device can trigger a transaction but its identity is not necessarily mirrored on the blockchain itself but may represented on a smart contract that is triggering. This is shown schematically in figure 26.

In terms of smart contracts (flows on Corda), beside all the flows to manage the network, (including viewing all transactions, gathering information or performing calculations) a main flow to creates and records transactions made by each device of each entity. A CoinTokenTypeContract represents a CreateEvolvableTokenFlow object. When triggering that flow, there's some mandatory fields like the identity of the device that is starting the flow, which entity represents that device, who is the consumer of the service. APIs manage and trigger transactions on the network and integrate them with external portals and applications.

The network may be deployed on AWS (or other) environments, segregated by entities with a defined structure based on access and network available ports and APIs. Each node has its own webserver capable of offering their own APIs and operate independently of the rest of the available network.

Integration of functionality has been made within a smartphone or other device (e.g. Android phone). The platform is capable of monitoring the network and manually triggering actions. The solution uses REST and SSH to interface with the R3 Corda instance, directly on nodes and provides managed capabilities like monitoring network transactions, triggering new transactions and controlling nodes through a Node-CLI. The next images show that capabilities in detail.

Within the automotive scenario paying for services may be achieved automatically by using R3 Corda blockchain capabilities.

### Interfaces/Dependencies

Various interfaces enable the control and triggering of transactions on the nodes through RESTful (or other) APIs. Other interfaces may be used, including RPC and SSH (see figure 26).

The following provides a list of example APIs that may be used, together with a description of their functionality. These APIs may be used internally or accessed by external entities.

| Name | Description |
|---|---|
| getMe | Get information about who the node is. |
| getPeers | Get information about the other nodes on the network. |
| getNetworkMap | Get a network map of connections. |
| getNetworkFeed | Get a network feed of transactions. |
| getNetworkParameters | Get network implementation parameters. |
| getRegisteredFlows | Get a list of possible runnable flows for that node. |
| getTransactionslD | Get a list of transactions IDs where the node has been involved. |
| getTransactionslnfoByID | Get information of a transaction by the ID. |
| getNumberOfTransactions | Get the number of transactions in the network. |
| getTransactionslnvolved | Get a list of transactions information where the node has been involved. |
| getNumberOfTransactionsInvolved | Get the number of transactions where the node has been involved. |
| getNodelnfo | Get information about the node itself. |
| getNodeTime | Get node current time. |
| getTransactions | Get a list of all transaction's information. |
| getVodacoins | Get the number of "Vodacoins" in balance. |
| postCreateTx | Create a transaction on the network. Described in the |
| | Business Logic Section. |

For each node inside the distributed ledger (e.g. blockchain network) the API'sare replicable and capable of running the same type of flows to interact with the rest of the network.

### Business Logic

Since interactions with the DLT (e.g. Corda) are made through a set of established REST endpoints and SSH connections, a DAB Blockchain Service connector coordinates the call flows needed for inserting and retrieving data from the ledger. For triggering these scenarios, a collection of user layouts in the DAB App build transactions following a message format described in an Exposure layer.

For this functionality, the service payment scenario (useCaseType "service"), requires only a "newdata" transaction type. It is possible to manually trigger several use cases and scenarios using an application (DAB app), for example.

To pay for services like the Congestion Charges, one-time parking, or any other service, the user selects on the DAB App the menu entry "New Monetizable Data", tab "Services", and fills out the fields:
Borrower - To who he wants to transfer tokens/value (service provider);
Value - Tokens quantity.
Type:
   MIN - Duration amount (e.g. minutes).
   CC - Congestion charge amount in monetary value.
   PAY - Any other payments in monetary value.
   Sub value - a numeric amount corresponding to the selected payment type (e.g.: 3 minutes, 3 euros, 3 Vodacoins)
   VIN - Vehicle Vin
   Slot ID - Optional field that can be used, for example, to specify a parking slot or toll port.
   Location - Optional field that can be used, for example, to specify a congestion area entry point or a parking location.
   ICCID - SIM Card ICCID or UICC.

This may be translated to a JSON object.

Automatically triggering and integration (e.g. automotive integration) provides improved direct interactions with the blockchain. Furthermore, settlement between network parties may be facilitated. The blockchain may register all the transaction made by consumers or between parties and so services are able to transact in the same network with settlements occurring between them. A smart contract/flow may determine a particular debt and automatically transfer funds from one party to another. Alternatively, external billing systems may aggregate all unitary transactions present on the network.

### Use case: "Event Driven Fleet"

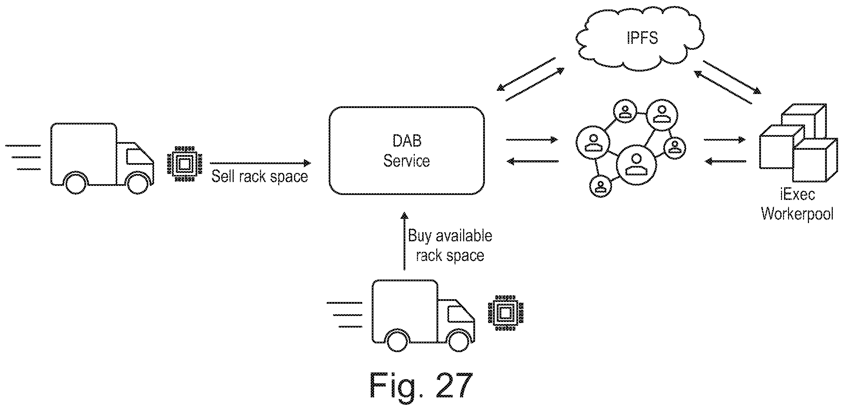

This use case directly may be used to generate data and provide a blockchain-based marketplace / exchange. This may be implemented in different situations and scenarios. In an example implementation, logistic companies may not make full use of freight cargo capacity. Sensor-generated data may be processed using edge confidential computing units to build "offer" datasets that, once shared in a marketplace or exchange, may be searched and bid on or bought by other parties or entities. In this example, the iExec platform was used to match jobs that are queued by the DAB Service and run by custom off-chain algorithms scripted by using iExec executed using Intel SGX enclaves. This is shown schematically in figure 27.

Whenever a seller wants to sell a route, it manually or automatically fills out an UI in the DAB App that will request the DAB Service to insert it on the iExec marketplace other exchange. Another entity may uses a similar process or layout within an application to describe their needs. Compatible offers (both past and future) may be searched for and matched. The DAB Service receives these queries and deploy matching jobs, notifying both parties if a match is found.

Automated deployment of datasets generated by detection algorithms may be employed.

### Interfaces/Dependencies

In a test system, a set of user interfaces has been created in the DAB App (Android or iOS based) to build offer and demand transactions and send them to Transactions Engine of the DAB Service.

In order to use the marketplace / exchange, the DAB Service interacts with an iExec SDK. This application is a command line NodeJS tool that wraps proprietary Ethereum transaction logic and another Blockchain Integration Layer connector for coordinating data insertion and retrieval. These operations each entail several OS calls to be run, where a set of ordered commands are issued to the SDK, which synchronously executes and returns textual JSON outputs that is processed and interpreted by the DAB Service. Since all iExec off-chain algorithms are run on secure enclaves, the datasets they use are not directly inserted into their blockchain. Instead these are deployed into a public IPFS network (or other file system), once encrypted with a secret generated by the SDK. This secret, along with dataset's IPFS hash, are each pushed to iExec during the insertion flow: the secret is sent to the Secret Management Service, and the hash is sent to the blockchain. For IPFS pinning services Piñata may be used. This implementation also use APIs.

The iExec SDK v4.0.3 was installed alongside the DAB Service instance in the same machine and required a configuration of NodeJS 8.10.0 and Docker 19.03.6.

The DAB App is used to create a set of user interfaces that build transactions that are sent to the DAB Service. This simulates capacity for offers and demand. However, such processes are automated in production systems with offers and acceptances being generated by different entities and process. A similar message format is used with two different types of transactions:
if "transactionType" equals "newdata", then an offer dataset is contained, triggering the DAB Service to deploy it to the blockchain/marketplace/exchange;
if it equals "lookingfordata", then it carries a demand dataset, containing the desired trip parameters.

Since the matching algorithm prepared by iExec deals with a strict dataset format similar for both offer and demand, a JSON structure that typifies a test scenario where a shipping company sells available truck space for hire at a certain price, date and route, both datasets inside the property "transactionObject".

### Trading Information

To manually create a dataset describing a space offering for a truck trip, the user selects on the DAB App the menu entry "New Monetizable Data", tab "Truck Capacity", and fills out the fields. In the production system, the dataset is created by individual trucks having sensors that can indicate capacity. The dataset includes:
Service Provider - Name of the service provider;
Offered Space - Quantity of available cargo units;
From - Trip origin;
To - Trip destination;
Date - Trip date;
Price - Asking price;

To manually create a dataset describing a request for a truck trip, the user selects on the DAB App the menu entry "Looking for Data", and fills out the fields:
Service Provider - Name of the entity looking for cargo space;
Required Space - Required cargo units;
From - Trip origin;
To - Trip destination;
Date - Trip date;
Price - Bid price.

Again, in the production system, the bids for cargo space may be automatically generated for entities requiring such services.

Upon reception of a "newdata" or "lookingfordata", the DAB Service begins a series of system level interactions with the iExec SDK. What is inserted into the iExec blockchain, is not the offer datasets themselves, but instead their IPFS hashes (along with other relevant iExec data).

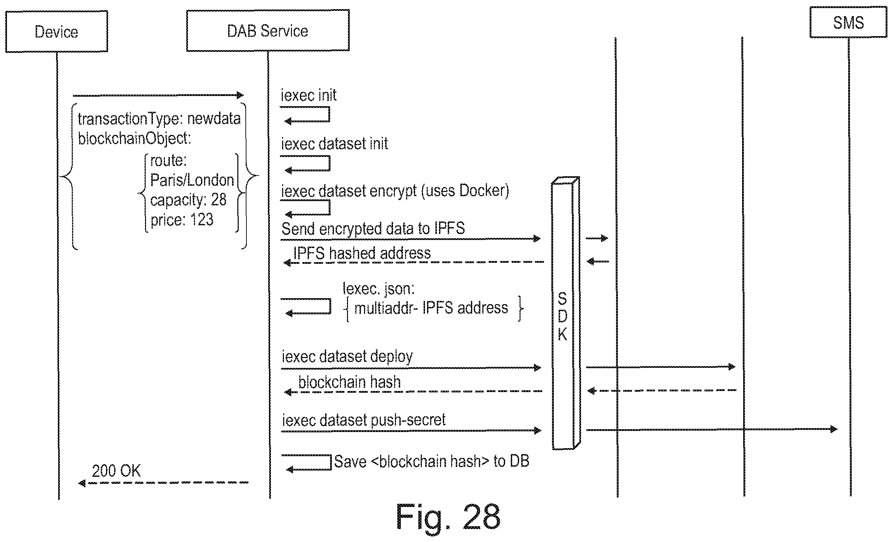

If a "newdata" transaction identifies a dataset to be inserted into the marketplace/exchange, in turn, a "lookingfordata" triggers a DAB-side flow that requires looping through the previously inserted "newdata" datasets to sequentially deploy and poll off-chain matching tasks (to be run at an Intel SGX enclave worker pools managed by iExec). This process is shown schematically in figure 28.

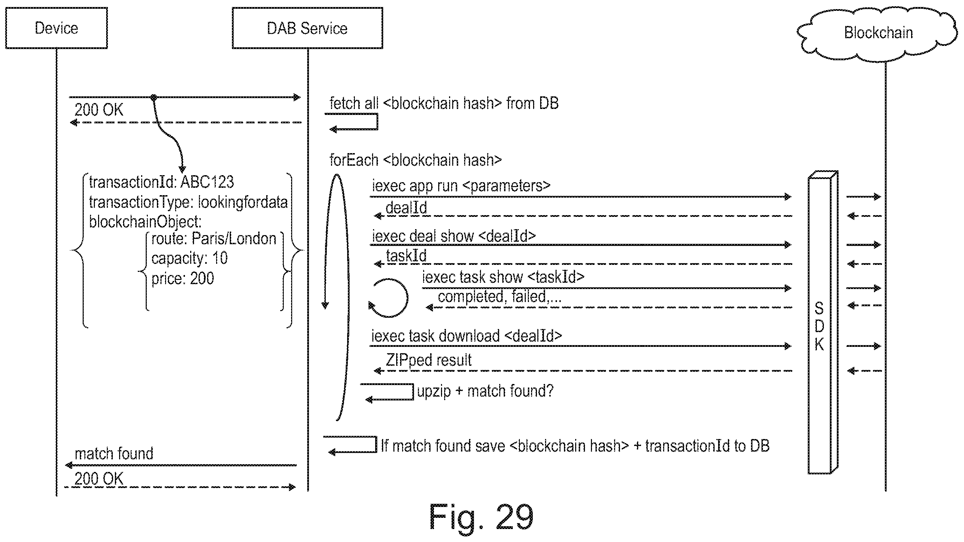

A matching process entails the DAB Service selecting unmatched offer and demand dataset hashes and inserting them into a "task" into the iExec worker pools. These tasks are picked up and run by the iExec worker pool, and then repeatedly polled by the DAB Service until a result is calculated. The DAB Service keeps an updated list containing all dataset hashes in its database. This process is shown schematically in figure 29.

Since these off-chain tasks are unable to execute multiple comparisons at the same time, the DAB Service is responsible for issuing executions on a dataset-by-dataset basis. If a match is found between an offer and a demand, their dataset hashes are registered at the DAB Service database, and the buyer's device notified.

In order to communicate matches to the devices that inserted both offer and demand datasets, Firebase Cloud Messaging platform may be used as it is a cross-platform cloud solution for messages and push notifications for Android applications, in particular. A component processes Firebase messaging for DAB-powered devices and all devices are made to register their Firebase connection token upon startup (sent along the device registration message POSTed to the DAB Service). Therefore, they are ready from boot. Again, in the production system, messages may be handled differently.

Automated feeding of data into the marketplace/exchange may be achieved using different mechanisms. For example, Al and sensor networks may be set up with automated market negotiations. Ready-made matching algorithms may also be deployed to secure worker pools.

In alternative implementations:
substituting IPFS with faster distributed storage solutions;
deploying matching algorithms capable of dealing with multiple datasets at the same time;
setting up specialized worker pools where the DAB Service unloads demand datasets and offer dataset hashes for continuous analysis providing asynchronous notification when a match is found.

### Use Case: "Energy Identity & Payment"

This use enables "DAB-ready devices" (with secure element on SIM and respective middleware) to be integrated into the Energy Web Foundation smart energy platform and become active participants.

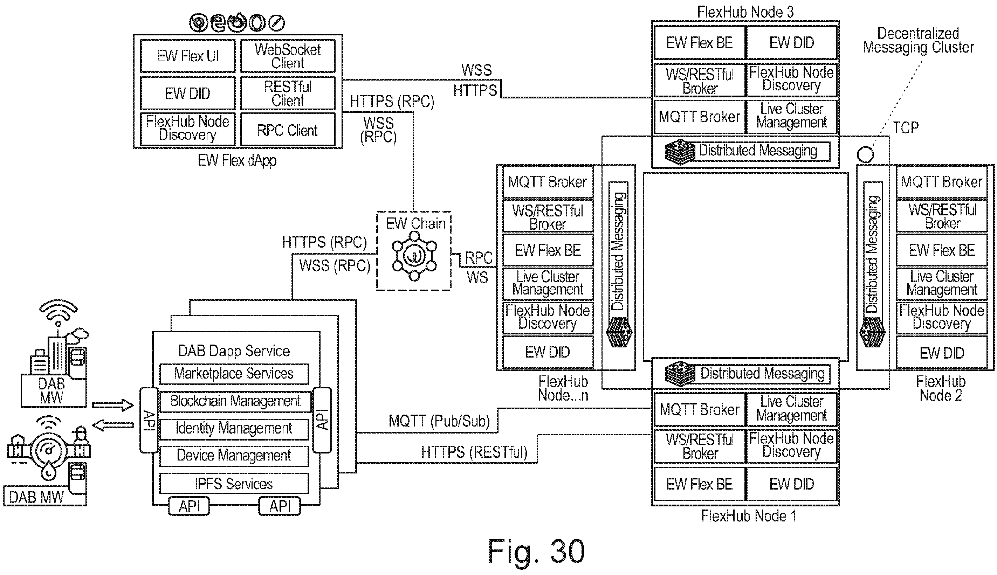

Connected devices exclusively read and digitally sign messages (all encoded in JWT strings) from Flexhub MQTT brokers. Asset owners' have programmed offer assignments (for buying or selling electrical power) and are managed and processed by the FlexHub platform. The DAB platform adds domain interconnection. This requires the DAB Service to be aware of transacted data and manipulates these data. Therefore, an integration architecture uses the DAB Service broker for devices and processes messaging with FlexHub nodes on their behalf. EWF device-side code (originally written in Python) is ported into a Spring Boot component running on the DAB Core that now serves multiple devices, without impacting in any way on FlexHub functionalities. A schematic overview of this system is shown in figure 30.

The relevant user/actor/roles defined by EWF include:
A TSO (transmission system operator) that submits requests for flexibility, defines constraints and limits and activates confirmed assets.

Asset Owners define offer parameters so that each of their personal assets can submit offers consistent with those parameters.

Installers approve the registration of Asset Owners' assets.

A Governing Body approves the registrations of other actor roles participating in the market.

TSOs submit their energy flexibility requests and constraints into the system, Asset owners submit their offers (either themselves or via third-party providers of intelligence), and the Flex system determines the lowest-cost way to meet the requests.

Other enhancements may include:
Registration, Provisioning, Offer creation automations.
Devices beyond those using Android or Java.

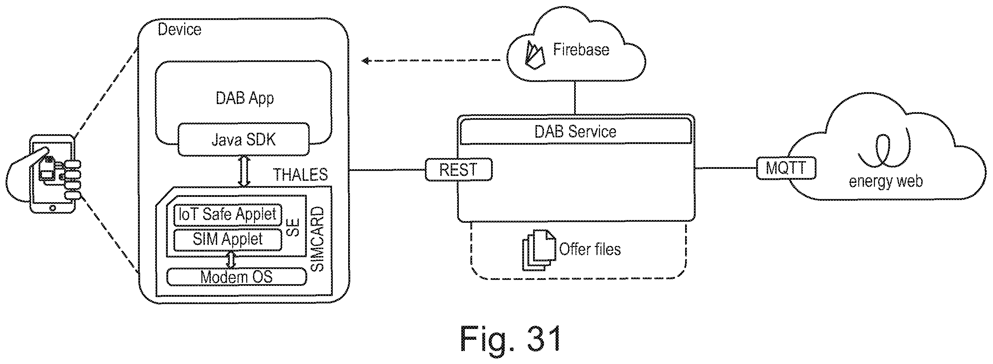

Devices are requested to sign transactions and notified of offer activations. These are triggered by the DAB Service. This avoids devices from each device polling their respective FlexHub MQTT queues for instructions. The DAB App provides functionality including:
Devices receive messages containing EWF transactions for signing, which are then POSTed to a custom endpoint on the DAB Core Service API, triggering the DAB Core to complete a respective EWF business flow;
Whenever activation messages are received, the DAB App displays a user notification, which may be substituted by a useful and real action (e.g. turning on/off a device reachable from the mobile application). This is shown schematically in figure 31.

### Business Logic

Flows are initiated from inputs made by the various EWF actors in the Flex WebApp. Since the DAB Service is the sole component that implements EWF business logic (and any sort of flow state observability), it asks devices to sign the various JWTs required by the FlexHub.

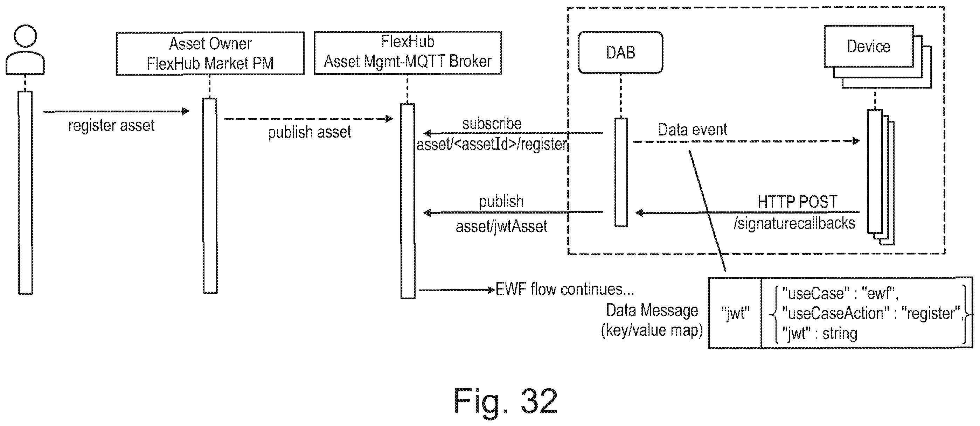

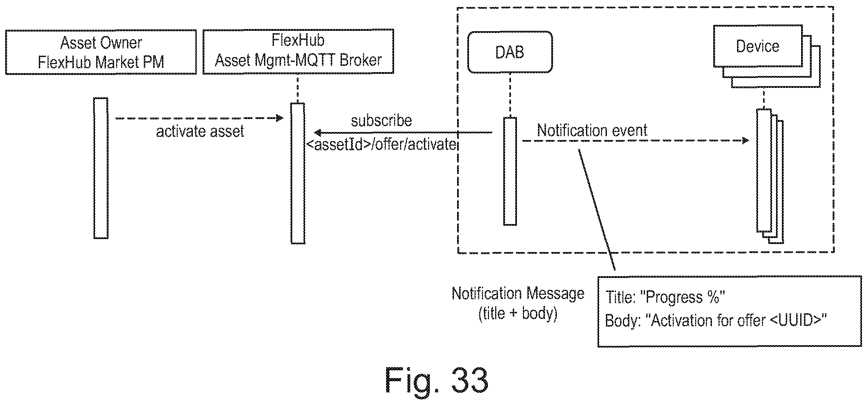

After signing the requested messages, devices return them to the DAB Service with enough information for it to determine which flow was running for the device sending the signed message. Devices may need to sign other JWTs apart from those pertaining to the use case at hand (one of the DAB stack objectives). Therefore, the Firebase Data Message format allow a fast adaptation for other scenarios. The property "useCase" specifies the DAB use case asking for a signature and, in order to identify the action to trigger on the DAB Service upon submittal, we felt appropriate to include an additional "useCaseAction" property to allow the server to distinguish between additional courses of actions within that particular use case. Figures 32 and 33 show a sequence diagram of this process.

For this integration the property "useCase" is tagged as "ewf", and the "useCaseAction" field was used to denote the specific EWF business flow that originally needed the device's signature.

In order to check the activation chart for a given offer as is fulfilled by a particular asset, Flex WebApp can also be used by Asset Owner and, through the dashboard a user can have access to the list of offers made, and select "data sheet" icon for the offer you wish to have charted.

Devices become part of the EWF network and this may be extended to further practical actions, such as turning on/off a generator, a battery, etc. The same is applicable to other marketplaces beyond flex grid, including Electric Vehicle Charging (EVC) or simple smart meter data monetization.

### Use Case: "Business & Consumer Parking"

This use case uses digital identities (for people, services, and things) to create a full end-to-end experience where automobiles may be paired with services regardless of whether the payment:
1. is made either by the driver (a consumer B2C scenario - using the driver's digital identification and an associated private account within a banking platform);
2. charged to the car itself, whose use is kept on a DLT for later processing (an enterprise B2B scenario - where the car belongs to a third party, e.g., a rental company);

The DAB Service manages and orchestrates flows (and hosting a Corda DLT for use for B2B payments). The vehicle may contains an internal router that runs the DAB Middleware application and a customized version of the DAB App (e.g. a Tablet App). This may be installed at embedded (e.g. iOS or Android-based) dashboard computer.

### Interfaces/Dependencies

A SPOT parking system may be installed at a same location as well as a Corda ledger similar to the "Service Payments" use case.

### Secured by SIM

For signing the transactions, the previously discussed Secured by SIM Approach may be used, consuming the PKI on SIM. The SIMs are added to a USB dongle which was plugged into a processor or other device (e.g. a vehicle). DAB Middleware executes on the device, exposing the DAB Middleware API for signing as previously described.

The SPOT parking system installed at parking infrastructure detects vehicles crossing its gates and operates with the DAB Service by calling an endpoint at a Custom API set (see above). This customization is used by SPOT to POST the license plate and gate information to the DAB Service and in turn expect a return code to indicate if:
On entry: a validated payment was setup and, therefore, the barrier can be opened;
On exit: payment was completed, and the car can exit the park.

### FINN

For managing the B2C scenario FINN (RTM) was used. This specialises in monetizing loT solutions that are built on a commercial-ready platform including toolkits that add IoT payments to smart devices. In summary:
A "product" provides a service and defines various actions for interacting with it, assigning for each a utilization price;

Devices register to use a "product", whose actions are charged to a payment method setup by the device owner, such as a credit card;

Whenever a device triggers a "product" action, a micropayment is registered at the FINN ecosystem.

For FINN, a "product "can be any real system actuating on the real world (which integrate with a FINN IOT SDK for connecting "product" actions with any automated activity) or an abstract entity that stands for an offline service. All usage logic is within SPOT is controlled by a DAB Service component. Configured actions for this "product" include gate ingresses and egresses, respectively charged zero and a parking fee based on the stay duration.

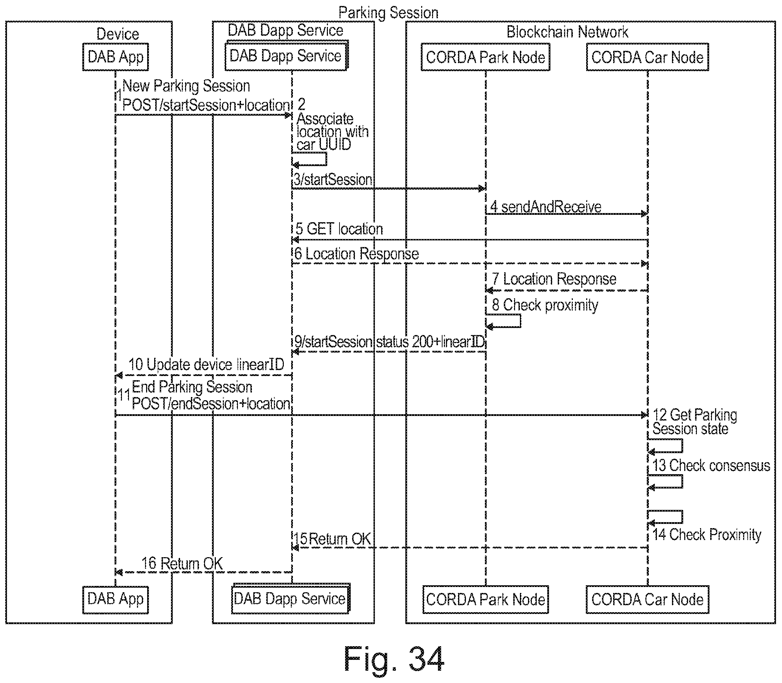

A sequence diagram for a parking session is shown in figure 34.

For triggering these scenarios, a collection of user layouts in the DAB App build transactions following the message format described in the DAB Management Core. For the car parking scenario (useCaseType "parking"), a session start and end are distinguished by the value of their "transactionType" ("newdata" and "endcordasession"), and the content of "transactionObject". This last field carries both purchaser (a car) and supplier (a car park) information to be committed to the DLT. Along with geographical information the DAB Service acts as a proxy server for each device (and used to verify device location when needed).

To begin a simulated parking session, the user selects on the DAB App the menu entry "New Monetizable Data, : tab "Parking, : and fills out the fields:
Initiator - Device starting the parking session (automatically filled with the device's SIM ID);
Target - Corda node where the vehicle is register;
Target UUID - Corda identifier (UUID) of the initiator vehicle;
Source UUID - Corda identifier (UUID) of the parking slot chosen for parking the vehicle;
GPS Option:
   MOCK_HAPPY_PATH - Starts a parking session using a GPS location: always results in a successful action;
   REAL_GPS - Starts a parking session using the real GPS location, as read from the Android OS. If using this option to start a successful parking session, the initiator device and the parking slot should be at a maximum of 6m of each other;

To end a parking session, the user selects an open session in the "Transactions" menu entry, and fills out the fields:
Minutes/Value units that will be charged on the blockchain;
GPS Option:
   MOCK_HAPPY_PATH - Stops the parking session using a GPS location; this results in a successful action;
   REAL_GPS - Ends the parking session using the real GPS location of the device;
   MOCK_END_SESSION_CAR_STILL_PARKE D - a test flag that instructs the Corda DApp to act as if the car has not left the parking spot.

### Business Logic

For this use case, the device using the "product" is the vehicle. However, its "actions" may be activated in B2C scenarios. Therefore, the concept of "Smart Services" has been used and is an association between users' digital identities and services provided by a DAB stack.

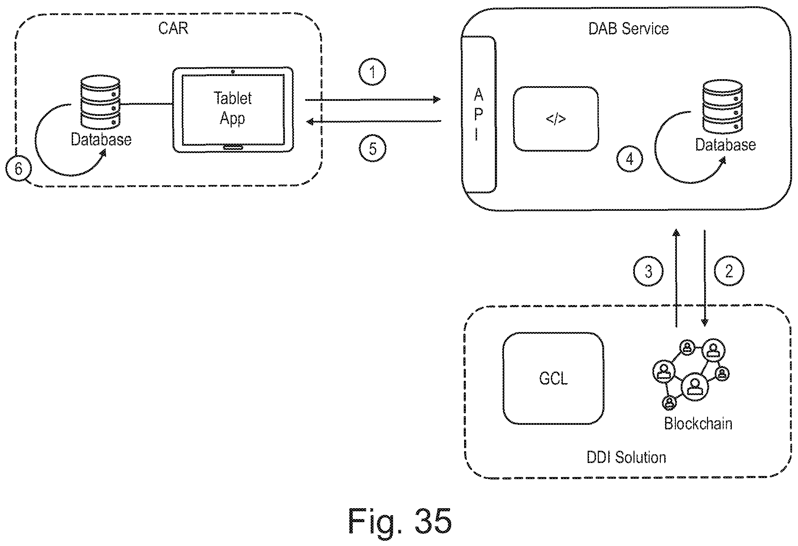

DAB associates the device (car) with the SIM: Since this is a FINN-based Smart Service, the DAB Service needs to know all FINN data associated with the SPOT Parking "product" in order to pass it along to devices wanting to use it. This is done whenever the vehicle Tablet App (or other processor within the vehicle or device) starts up: installed alongside it is a FINN-provided app (embedding a FINN IOT SDK) that contains code to automatically set up that vehicle to be registered at the FINN Core backend and be ready to use the SPOT Parking "product" whenever required). This provisioning flow is shown in figure 35 and includes:

| Step | Description | Trigger |
|---|---|---|
| 1 | Manufacturer adds a new car to the SCB-DAB system | Manufacturer |
| 2 | DAB will deploy a new smart contract for that car identity in the DDI blockchain network | DAB |
| 3 | The DDI blockchain network will respond with the corresponding did | DDI Blockchain |
| 4 | DAB will associate that did with the car license plate | DAB |
| 5 | DAB will send the car's did to the corresponding car | DAB |
| 6 | The car will store its did in its database | Car |

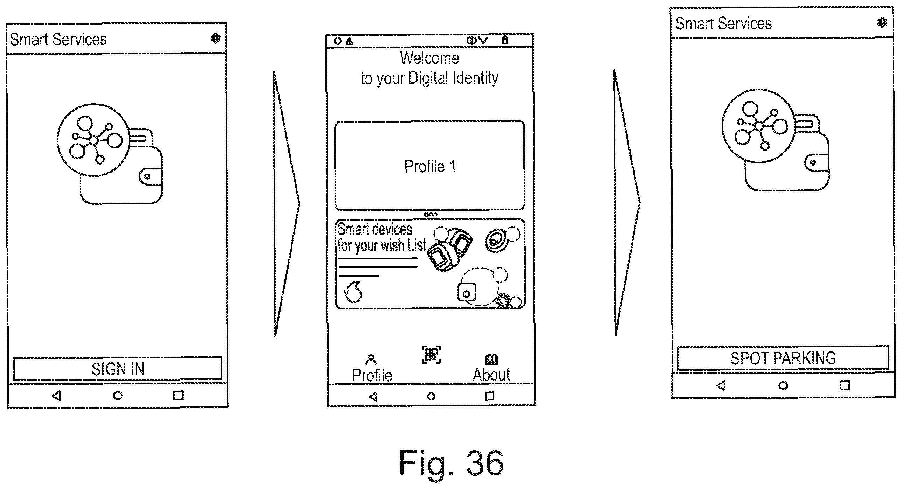

Smart Service Onboarding: Whenever a user wishes to conduct a "Smart Service" onboarding, he does it using a specially developed Android application (henceforth known as "Smart Services App"). The app cooperates with a DID application for selecting a digital identity and associate with it a Smart Service chosen from its UI. This is shown schematically in figure 36.

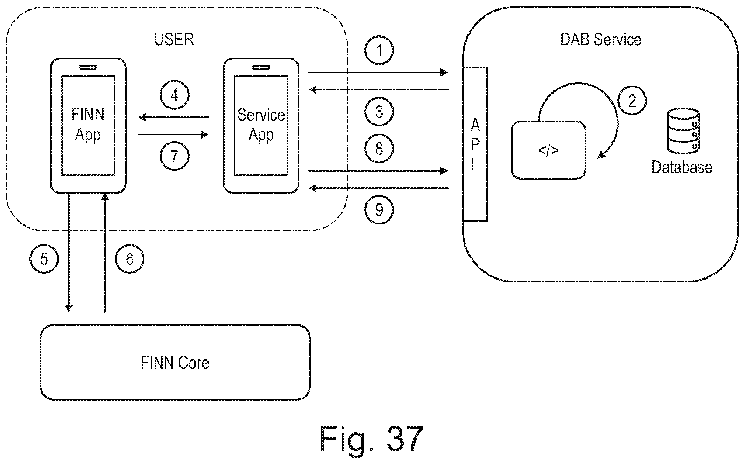

At this point, if a user onboarded for using the "SPOT Parking Smart Service", the DAB Service will have responded with enough data (the data sent at start by the Tablet app) for configuring user-side FINN payment methods, and, for this, the Smart Services app automatically communicates via intents with another FINN-supplied application (embedding the FINN Mobile SDK) that first asks the user for a valid paying credit card and then registers it as a consumer of the SPOT Parking product. This is shown schematically in figure 37. The following steps may be taken in this example implementation.

### B2C Service Onboarding (figure 37)

| Step | Description | Trigger |
|---|---|---|
| 1 | Smart Services app triggers the DAB to create a new service for user | Smart Services App |
| 2 | DAB checks profile type (this case if Personal) and stores user data | DAB |
| 3 | DAB responds with data needed for User side initialization: user profile data + service data | DAB |
| 4 | Smart Service app triggers the Finn Mobile App to create a new service (via intents) | Smart Services App |
| 5 | Finn Mobile app forwards request to FINN Core | FINN Mobile Application |
| 6 | The FINN Core responds with a success or error message | FINN Core |
| 7 | Finn Mobile app responds with a success or error message (via intent return) | FINN Mobile Application |
| 9 | Smart Services app POSTs Finn onboarding confirmation to /services/confirmation | Smart Services App |

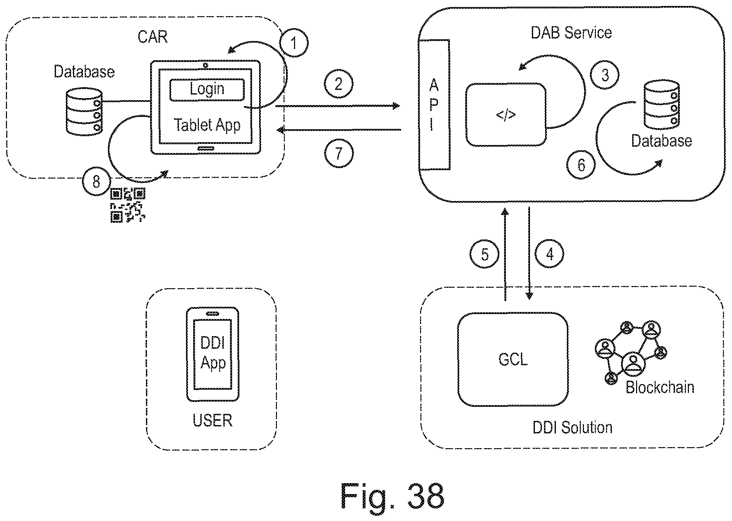

Identify the device (e.g. car): In order to determine which car a user will be driving (and understand vehicle will trigger the FINN SPOT Parking "product" actions), a login mechanism is established at the DAB platform that leverages on Digital Identity capabilities to create sessions between users and things: in this way, whenever a car crosses an ingress gate, the DAB Service will know who is driving it. This flow is triggered when a driver inputs the car's license plate on the DAB App (pre-installed on the car's onboard tablet) and its subsequent activities can be divided in two phases:
QR Code generation: the DAB App generates a QR Code on the tablet for the driver to scan in order to proceed with the authentication process; and
Driver authentication: the driver scans the QR Code triggering the DDI App to open. From there a driver authorises (or not) which personal information they want to share with the vehicle. While some of this data is compulsory, others are optional - this is a design decision configured in the DAB (which acts as a proxy for all vehicles). All authorized information shared by the user may be stored in the DAB. This is shown schematically in figure 38.

### Driver-Car Login through QR Code (figure 38)

| Step | Description | Trigger |
|---|---|---|
| 1 | Driver inputs license plate in the car tablet app | Tablet App |
| 2 | Tablet App sends a login request to the DAB | Tablet App |
| 3 | DAB generates a random topic UUID that identifies that login "session" | DAB |
| 4 | DAB request a nonce + authorization ID to the GCL | DAB |
| 5 | GCL response: nonce + authlD | GCL |
| 6 | DAB associates the topic with nonce + authlD + step 2 data | DAB |
| 7 | DAB sends to the Tablet App data it needs to generate QR code | DAB |
| 8 | Tablet App generates QR Code for authentication | Tablet App |

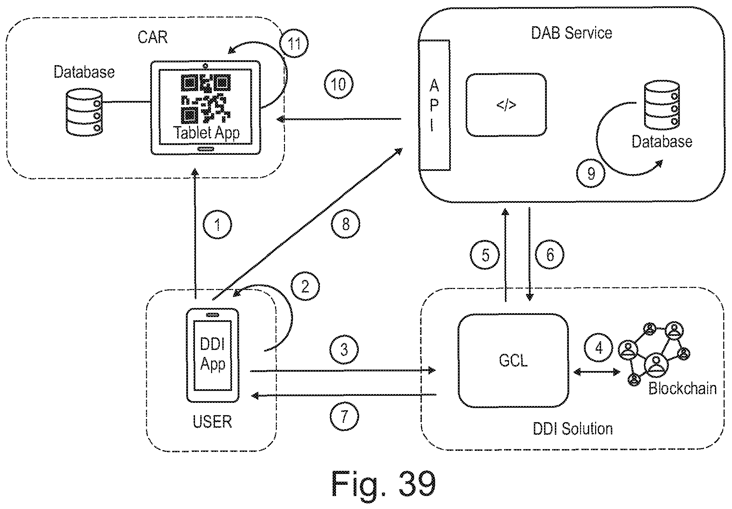

### Driver-Car Login through Decentralized Digital ID (DDI) (figure 39)

| Step | Description | Trigger |
|---|---|---|
| 1 | The driver reads the QR Code with his phone (contains topic + car DID identity) | Driver |
| 2 | The DDI App will open and the driver will select and/or authorize the data he wants to share about himself | DDI App |
| 3 | The DDI App shares that information with the | GCL |
| 4 | The GCL will ask the blockchain for the DAB returnURL stored in the provided car identity | GCL |
| 5 | The GCL POSTs that endpoint, checking for topic existence. | |
| | If topic exists, then DAB stores the indicated userDid pertaining to the user attempting to login. | GCL |
| 6 | DAB sends an Ok or error response to the GCL | DAB |
| 7 | GCL sends the login result to the DDI APP | GCL |
| 8 | Once the login result is successful, the DDI App POSTs the user profile + profile type to the DAB | DDI App |
| 9 | The DAB stores the user profile + profile type for this user/car session | DAB |
| 10 | The DAB sends the login result to the Tablet App | DAB |
| 11 | The Tablet App displays a success message | Tablet App |

DAB service: The DAB Service is triggered every time SPOT POSTs information on detected vehicle license plates to a custom REST endpoint at the Custom API (implemented in accordance with specifications of the pre-existing SPOT infrastructure). The ensuing logic required an additional component to be integrated within the DAB Core to manage the SPOT business flow, which can be summarised:
when a vehicle enters the car park:
   if the Smart Service was onboarded with a B2B profile, the DAB Service uses the Corda connector at the Blockchain Integration Layer to open a session for that vehicle on the Corda DLT (mirroring the "Parking & Tolls" use case);
   if the Smart Service was onboarded with a B2C profile, a Firebase message is pushed to the vehicle's Tablet App to trigger a product activation on the Finn backend for the SPOT product identifier.
when a vehicle leaves the car park:
   if the Smart Service was onboarded with a B2B profile, the DAB Service closes the previously opened DLT session for that vehicle;
   if the Smart Service was onboarded with a B2C profile, a Firebase message is pushed to the vehicle's Tablet App to trigger a product deactivation on the Finn backend for the SPOT product identifier.

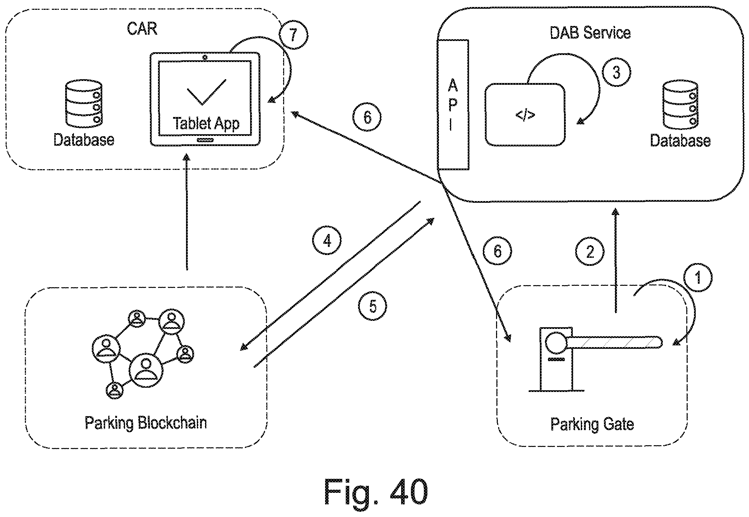

### B2B Start Parking flow detail (figure 40).

| Step | Description | Trigger |
|---|---|---|
| 1 | A camera at an entry gate scans a license plate | Parking Gate |
| 2 | The parking gate request the DAB to start a new parking session for that license plate | Parking Gate |
| 3 | DAB checks user's DID profile type used for onboarding the parking service (this case if Business) | DAB |
| 4 | DAB triggers a new parking session in the Corda parking blockchain | DAB |
| 5 | Response from the blockchain to the DAB | |
| | - success or error | Parking Blockchain |
| 6 | DAB sends a Firebase notification to the Tablet App notifying about a new parking session and returns step 2 with appropriate message, in turn triggering the gate to open | DAB |
| 7 | Tablet App show information on the screen regarding the new parking session | Tablet App |

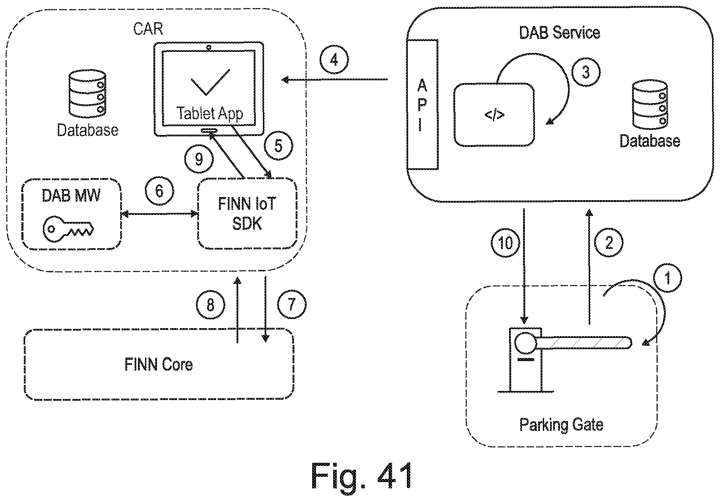

### B2C Start Parking flow detail (figure 41)

| Step | Description | Trigger |
|---|---|---|
| 1 | A camera in the parking gate scans a license plate | Parking Gate |
| 2 | The parking gate request the DAB to start a parking session for that license plate | Parking Gate |
| 3 | DAB checks user's DID profile type used for onboarding | |
| | the parking service (this case if Personal) | DAB |
| 4 | DAB sends a Firebase notification to the Tablet App, triggering a Finn action (park entry) | DAB |
| 5 | Tablet App triggers to the FINN loT SDK parking entry action, via intent | Tablet App |
| 6 | FINN IoT SDK uses DAB Middleware to sign the transaction with the corresponding key pair | FINN loT SDK |
| 7 | FINN loT SDK triggers a parking entry action in FINN Core | FINN loT SDK |
| 8 | Response from the FINN Core to FINN loT SDK | |
| | - success or error | FINN Core |
| 9 | FINN loT SDK signals operation result via intent return and Tablet App displays notification popup | FINN loT SDK |
| 10 | DAB returns from the POST made at step 2, triggering the gate to open | Tablet App |

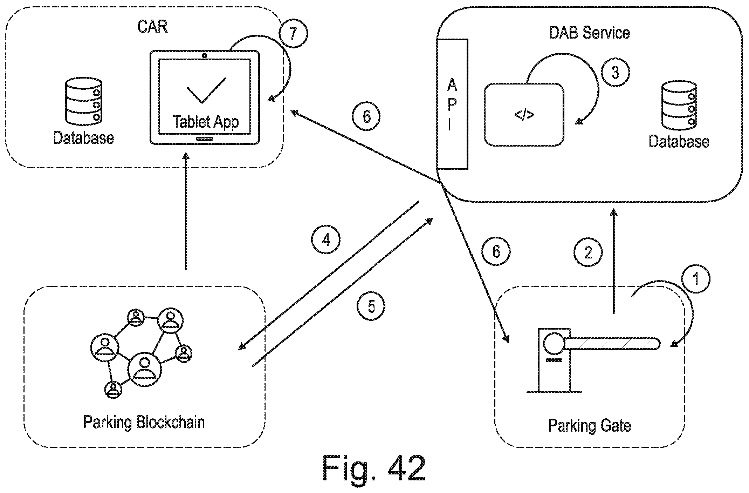

### B2B End Parking flow detail (figure 42).

| Step | Description | Trigger |
|---|---|---|
| 1 | A camera at an exit gate scans a license plate | Parking Gate |
| 2 | Gate requests the DAB to end a parking session for that license plate | Parking Gate |
| 3 | DAB checks user's DID profile type used for onboarding the parking service (this case if Business) | DAB |
| 4 | DAB triggers a parking session close in the Corda parking blockchain | DAB |
| 5 | Response from the blockchain to the DAB - success or error | Parking Blockchain |
| 6 | DAB sends a Firebase notification to the Tablet App containing the parking session price and duration, and returns step 2 with appropriate message, in turn triggering the gate to open | DAB |
| 7 | Tablet App show information on the screen regarding the new pairking session Tablet App | |

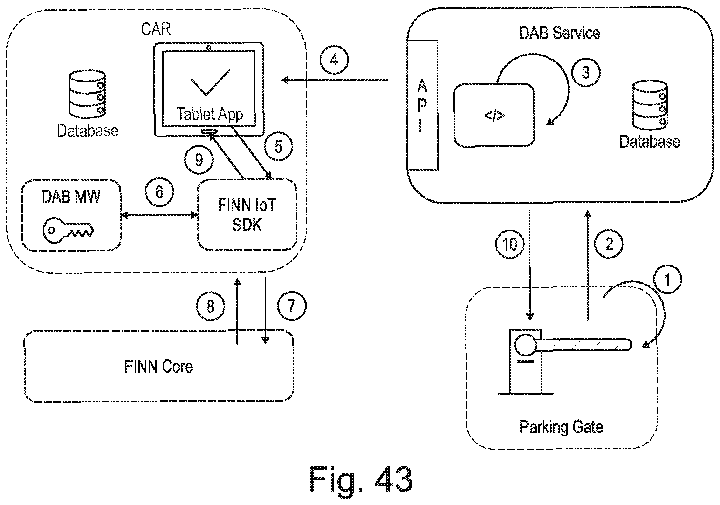

### B2B End Parking flow detail (figure 43)

| Step | Description | Trigger |
|---|---|---|
| 1 | A camera at an exit gate scans a license plate | Parking Gate |
| 2 | Gate requests the DAB to end a parking session for that license plate Parking Gate | |
| 3 | DAB checks user's DID profile type used for onboarding the parking service (this case if Personal) | DAB |
| 4 | DAB sends a Firebase notification to the Tablet App containing the parking session price and duration triggering a Finn action (park exit) | DAB |
| 5 | Tablet App triggers to the FINN loT SDK parking exit action, via intent | Tablet App |
| 6 | FINN loT SDK uses DAB Middleware to sign the transaction with the corresponding key pair | FINN loT SDK |
| 7 | FINN loT SDK triggers a parking exit action in FINN Core | FINN loT SDK |
| 8 | Response from the FINN Core to FINN loT SDK | |
| | - success or error | FINN Core |
| 9 | FINN loT SDK signals operation result via intent return and Tablet App displays notification popup | FINN loT SDK |
| 10 | DAB returns from the POST made at step 2, triggering the gate to open | Tablet App |

A similar solution can be applied to different Parking solutions, and also to different domains in Smart Cities for example, where EV Charging and Tolls could follow the same flows. In terms of Consumer Digital ID and Payments, improvements on the end-to-end experience have been made

### DAB User Interfaces

In the test environment there are two main User Interfaces (UI):
DAB APP: android (or other) mobile application
DAB AEP: Thingworx extension to connect DAB Corda Blockchain
Uls are important to enable customers to make use of all capabilities but also to allow operations and maintenance teams to manage the ecosystem and solution as well as monitoring and extracting information.

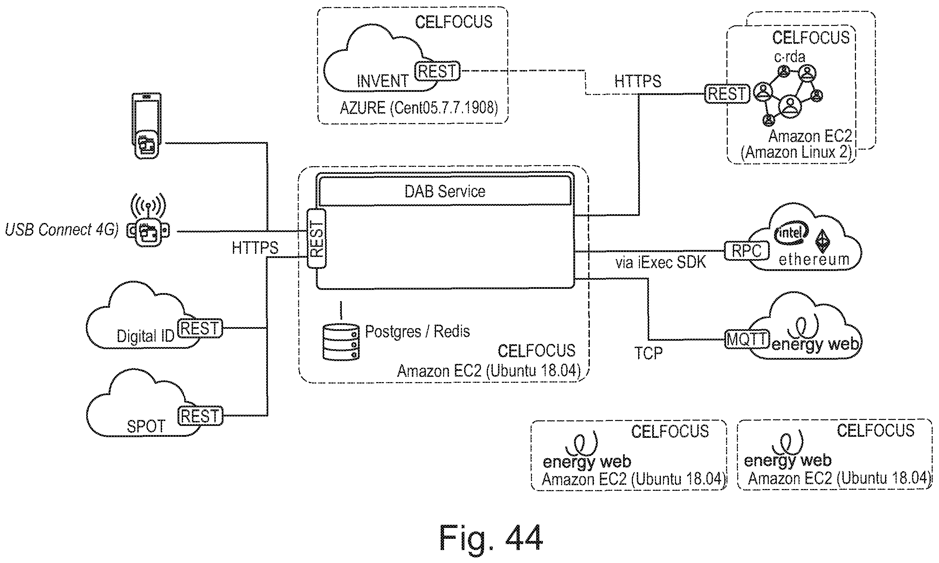

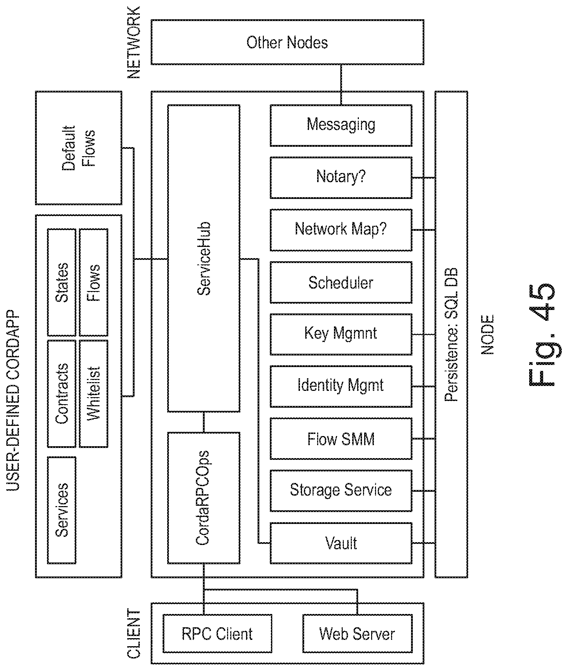

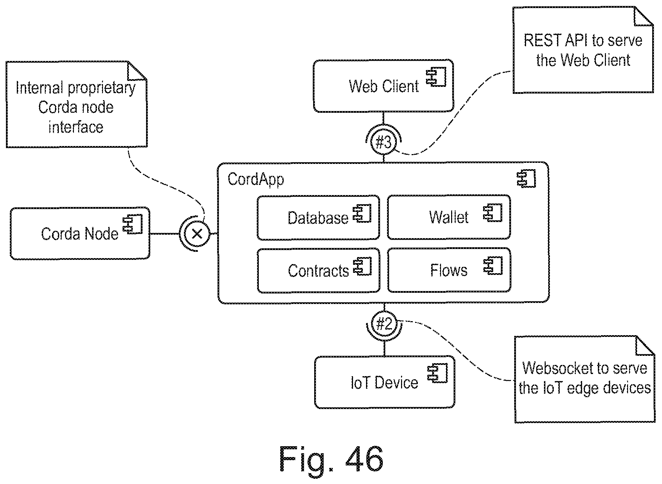

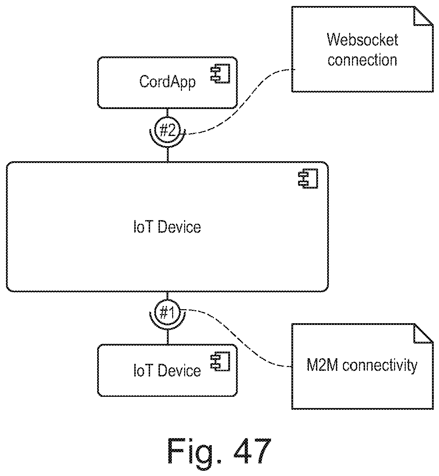

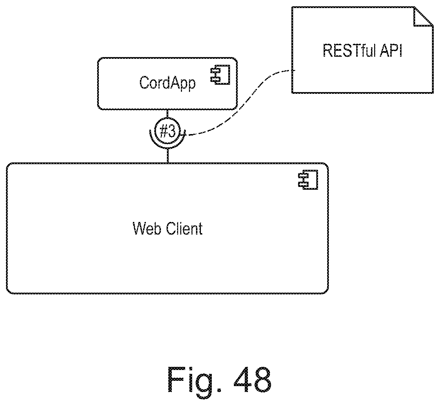

Figures 44 to 48 show example platform environments. Other server types and services may be used.

Although this describes a test scenario, a real parking session may be processed in a similar way but does not require the app. All messages may be initiated from sensors within or around the vehicle (or parking location) and detected events.

As will be appreciated by the skilled person, details of the above embodiment may be varied without departing from the scope of the present invention, as defined by the appended claims.

For example, different distributed ledgers or ledger technology may be used. The UICC may be an embedded SIM, for example. Many different types of devices may be used including mobile, movable, fixed, supervised, unsupervised, domestic, commercial or industrial devices, for example.

Many combinations, modifications, or alterations to the features of the above embodiments will be readily apparent to the skilled person and are intended to form part of the invention. Any of the features described specifically relating to one embodiment or example may be used in any other embodiment by making the appropriate changes.

## Claims

1. A method for recording transactions on a distributed ledger, the method comprising the steps of:
creating a secure channel between a device (110) and a bootstrapping server function, BSF, using a pre-provisioned key stored within a UICC (120) of the device (110) and at the BSF;
sharing a secret between the device (110) and the BSF over the secure channel;
storing the shared secret on the UICC (120) of the device (110); and
adding one or more transactions to a block of a distributed ledger (150), wherein the one or more transactions are identified, by the device,
using the shared secret.

2. The method of claim 1 further comprising the steps of:
transmitting the shared secret to a server (140) from the BSF, wherein the shared secret is used to secure a communications channel between the device (110) and the server (140) and the server (140) adds the one or more transactions to the block of the distributed ledger (150).

3. The method of claim 2, wherein the one or more transactions are associated with a wallet identifier of the server (140) within the distributed ledger (150) and the one or more transactions are identified by:
the server (140) storing remotely from the device (110) a transaction identifier of the one or more transactions added to the block of the distributed ledger (150); and
the server (140) mapping the stored transaction identifier to the shared secret.

4. The method of claim 2 or claim 3, wherein the transaction identifier is based on an identity of the UICC (120) and the shared secret.

5. The method of claim 1, wherein the transaction added to the block is identified by a wallet identifier based on an identity of the UICC (120) and the shared secret.

6. The method according to any previous claim, where the shared secret is stored within a trusted execution environment, TEE, of the UICC (120).

7. The method according to any previous claim, wherein the shared secret is a symmetric key.

8. The method according to any previous claim, wherein creating the secure channel between the device (110) and the BSF and sharing the secret between the device (110) and the BSF over the secured channel uses generic bootstrap architecture, GBA, and/or according to the GSMA loT Security Applet Interface Description, loT SAFE.

9. The method according to any previous claim, wherein the device (110) is any one of: an loT device, a UE, a smartphone, a vehicle, an automobile, or an unmanned aerial vehicle.

10. A system comprising:
a distributed ledger (150);
a bootstrapping server function, BSF;
a device (110) having a UICC (120);
one or more processors and memory, the memory containing program instructions to cause the one or more processors to:
create a secure channel between the device (110) and the BSF, using a pre-provisioned key stored within the UICC (120) of the device (110) and at the BSF;
share a secret between the device (110) and the BSF over the secure channel; and
store the shared secret on the UICC (120) of the device (110), and
add one or more transactions to a block of the distributed ledger (150), wherein the one or more transactions are identified, by the device, using the shared secret.

11. The system of claim 10 further comprising:
a server (140);
wherein the BSF is configured to transmit the shared secret to the server (140);
and wherein the program instructions further cause the one or more processors to use the shared secret to secure a communications channel between the device (110) and the server (140) and wherein the server (140) adds the one or more transactions to a block of the distributed ledger (150).

12. The system of claim 11, wherein the one or more transactions are associated with a wallet identifier of the server (140), the server (140) further comprising a database configured to store a transaction identifier of the one or more transactions added to the block of the distributed ledger (150), and a mapping of the stored transaction identifier to the shared secret shared.

13. The system of claim 11 or claim 12, wherein the transaction identifier is based on an identity of the UICC (120) and the shared secret.

14. The system of claim 10, wherein the transaction added to the block is identified by a wallet identifier based on an identity of the UICC (120) and the shared secret.

15. The system of claim 14, wherein the device (110) comprises the one or more processors and the memory containing program instructions to cause the one or more processors to add the one or more transactions to the block of the distributed ledger (150).

## Patentansprüche

1. Verfahren zum Aufzeichnen von Transaktionen auf einem verteilten Ledger, wobei das Verfahren die folgenden Schritte umfasst:
Erzeugen eines sicheren Kanals zwischen einer Vorrichtung (110) und einer Bootstrapping-Serverfunktion, BSF, unter Verwendung eines vorab bereitgestellten Schlüssels, der innerhalb einer UICC (120) der Vorrichtung (110) und bei der BSF gespeichert ist;
Teilen eines Geheimnisses zwischen der Vorrichtung (110) und der BSF über den sicheren Kanal;
Speichern des geteilten Geheimnisses auf der UICC (120) der Vorrichtung (110); und
Hinzufügen einer oder mehrerer Transaktionen zu einem Block eines verteilten Ledgers (150), wobei die eine oder die mehreren Transaktionen, durch die Vorrichtung, unter Verwendung des geteilten Geheimnisses identifiziert werden.

2. Verfahren nach Anspruch 1, das ferner die folgenden Schritte umfasst:
Übermitteln des geteilten Geheimnisses an einen Server (140) von der BSF, wobei das geteilte Geheimnis verwendet wird, um einen Kommunikationskanal zwischen der Vorrichtung (110) und dem Server (140) zu sichern, und der Server (140) die eine oder die mehreren Transaktionen dem Block des verteilen Ledgers (150) hinzufügt.

3. Verfahren nach Anspruch 2, wobei die eine oder die mehreren Transaktionen mit einer Wallet-Kennung des Servers (140) innerhalb des verteilten Ledgers (150) verknüpft sind und die eine oder die mehreren Transaktionen identifiziert werden durch:
den Server (140), der von der Vorrichtung (110) entfernt eine Transaktionskennung der einen oder der mehreren Transaktionen speichert, die dem Block des verteilten Ledgers (150) hinzugefügt wurden; und
den Server (140), der die gespeicherte Transaktionskennung dem geteilten Geheimnis zuordnet.

4. Verfahren nach Anspruch 2 oder Anspruch 3, wobei die Transaktionskennung auf einer Identität der UICC (120) und dem geteilten Geheimnis beruht.

5. Verfahren nach Anspruch 1, wobei die dem Block hinzugefügte Transaktion durch eine Wallet-Kennung identifiziert wird, die auf einer Identität der UICC (120) und dem geteilten Geheimnis beruht.

6. Verfahren nach einem vorstehenden Anspruch, wobei das geteilte Geheimnis in einer vertrauenswürdigen Ausführungsumgebung, TEE, der UICC (120) gespeichert wird.

7. Verfahren nach einem vorstehenden Anspruch, wobei das geteilte Geheimnis ein symmetrischer Schlüssel ist.

8. Verfahren nach einem vorstehenden Anspruch, wobei Erzeugen des sicheren Kanals zwischen der Vorrichtung (110) und der BSF und Teilen des Geheimnisses zwischen der Vorrichtung (110) und der BSF über den gesicherten Kanal eine generische Bootstrap-Architektur, GBA, verwendet und/oder gemäß der GSMA IoT Security Applet Interface Description, loT SAFE.

9. Verfahren nach einem vorstehenden Anspruch, wobei die Vorrichtung (110) eines ist von:
einer loT-Vorrichtung, einem UE, einem Smartphone, einem Fahrzeug, einem Automobil oder einem unbemannten Luftfahrzeug.

10. System, umfassend:
einen verteilten Ledger (150);
eine Bootstrapping-Serverfunktion, BSF;
eine Vorrichtung (110), die eine UICC (120) aufweist;
einen oder mehrere Prozessoren und Speicher, wobei der Speicher Programmanweisungen enthält, um den einen oder die mehreren Prozessoren zu veranlassen:
einen sicheren Kanal zwischen der Vorrichtung (110) und der BSF zu erzeugen, wobei ein vorab bereitgestellter Schlüssel verwendet wird, der innerhalb der UICC (120) der Vorrichtung (110) und bei der BSF gespeichert ist;
ein Geheimnis zwischen der Vorrichtung (110) und der BSF über den sicheren Kanal zu teilen; und das geteilte Geheimnis auf der UICC (120) der Vorrichtung (110) zu speichern, und
eine oder mehrere Transaktionen zu einem Block des verteilten Ledgers hinzuzufügen (150), wobei die eine oder die mehreren Transaktionen, durch die Vorrichtung, unter Verwendung des geteilten Geheimnisses identifiziert werden.

11. System nach Anspruch 10, ferner umfassend:
einen Server (140);
wobei die BSF dafür konfiguriert ist, das geteilte Geheimnis an den Server (140) zu übermitteln; und
wobei die Programmanweisungen ferner den einen oder die mehreren Prozessoren veranlassen, das geteilte Geheimnis zu verwenden, um einen Kommunikationskanal zwischen der Vorrichtung (110) und dem Server (140) zu sichern, und wobei der Server (140) die eine oder die mehreren Transaktionen einem Block des verteilten Ledgers (150) hinzufügt.

12. System nach Anspruch 11, wobei die eine oder die mehreren Transaktionen mit einer Wallet-Kennung des Servers (140) verknüpft sind, wobei der Server (140) ferner eine Datenbank, die dafür konfiguriert ist, eine Transaktionskennung der einen oder der mehreren Transaktionen zu speichern, die dem Block des verteilten Ledgers (150) hinzugefügt wurden, und eine Zuordnung der gespeicherten Transaktionskennung zum geteilten Geheimnis umfasst.

13. System nach Anspruch 11 oder Anspruch 12, wobei die Transaktionskennung auf einer Identität der UICC (120) und dem geteilten Geheimnis beruht.

14. System nach Anspruch 10, wobei die dem Block hinzugefügte Transaktion durch eine Wallet-Kennung identifiziert wird, die auf einer Identität der UICC (120) und dem geteilten Geheimnis beruht.

15. System nach Anspruch 14, wobei die Vorrichtung (110) den einen oder die mehreren Prozessoren und einen Speicher umfasst, der Programmanweisungen enthält, um den einen oder die mehreren Prozessoren zu veranlassen, die eine oder die mehreren Transaktionen dem Block des verteilten Ledgers (150) hinzuzufügen.

## Revendications

1. Procédé d'enregistrement de transactions sur un registre distribué, comprenant les étapes de :
création d'un canal sécurisé entre un dispositif (110) et une fonction de serveur d'amorçage, BSF, en utilisant une clé pré-provisionnée stockée dans une UICC (120) du dispositif (110) et au niveau de la BSF ;
partage d'un secret entre le dispositif (110) et la BSF sur le canal sécurisé ;
stockage du secret partagé sur l'UICC (120) du dispositif (110) ; et
ajout d'une ou plusieurs transactions à un bloc d'un registre distribué (150), dans lequel les une ou plusieurs transactions sont identifiées, par le dispositif, à l'aide du secret partagé.

2. Procédé selon la revendication 1 comprenant en outre les étapes de :
transmission du secret partagé à un serveur (140) depuis la BSF, dans lequel le secret partagé est utilisé pour sécuriser un canal de communication entre le dispositif (110) et le serveur (140), et le serveur (140) ajoute les une ou plusieurs transactions au bloc du registre distribué (150).

3. Procédé selon la revendication 2, dans lequel les une ou plusieurs transactions sont associées à un identifiant de portefeuille du serveur (140) au sein du registre distribué (150) et les une ou plusieurs transactions sont identifiées par :
le serveur (140) stockant à distance du dispositif (110) un identifiant de transaction des une ou plusieurs transactions ajoutées au bloc du registre distribué (150) ; et
le serveur (140) associant l'identifiant de transaction stocké au secret partagé.

4. Procédé selon la revendication 2 ou la revendication 3, dans lequel l'identifiant de transaction est basé sur une identité de l'UICC (120) et le secret partagé.

5. Procédé selon la revendication 1, dans lequel la transaction ajoutée au bloc est identifiée par un identifiant de portefeuille basé sur une identité de l'UICC (120) et le secret partagé.

6. Procédé selon toute revendication précédente, où le secret partagé est stocké dans un environnement d'exécution de confiance, TEE, de l'UICC (120).

7. Procédé selon toute revendication précédente, dans lequel le secret partagé est une clé symétrique.

8. Procédé selon toute revendication précédente, dans lequel la création du canal sécurisé entre le dispositif (110) et la BSF et le partage du secret entre le dispositif (110) et la BSF sur le canal sécurisé utilisent une architecture d'amorçage générique, GBA, et/ou conforme à la description de l'interface de l'applet de sécurité GSMA IoT, loT SAFE.

9. Procédé selon toute revendication précédente, dans lequel le dispositif (110) est un quelconque élément parmi :
un dispositif loT, un UE, un smartphone, un véhicule, une automobile ou un véhicule aérien sans pilote.

10. Système comprenant :
un registre distribué (150) ;
une fonction de serveur d'amorçage, BSF ;
un dispositif (110) présentant une UICC (120) ;
un ou plusieurs processeurs et une mémoire, la mémoire contenant des instructions de programme pour amener les un ou plusieurs processeurs à :
créer un canal sécurisé entre le dispositif (110) et la BSF, en utilisant une clé pré-provisionnée stockée dans l'UICC (120) du dispositif (110) et au niveau de la BSF ;
partager un secret entre le dispositif (110) et la BSF sur le canal sécurisé ; et stocker le secret partagé sur l'UICC (120) du dispositif (110), et
ajouter une ou plusieurs transactions à un bloc du registre distribué (150), dans lequel les une ou plusieurs transactions sont identifiées, par le dispositif, à l'aide du secret partagé.

11. Système selon la revendication 10 comprenant en outre :
un serveur (140) ;
dans lequel la BSF est configurée pour transmettre le secret partagé au serveur (140) ; et
dans lequel les instructions du programme amènent en outre les un ou plusieurs processeurs à utiliser le secret partagé pour sécuriser un canal de communication entre le dispositif (110) et le serveur (140) et dans lequel le serveur (140) ajoute les une ou plusieurs transactions à un bloc du registre distribué (150).

12. Système selon la revendication 11, dans lequel les une ou plusieurs transactions sont associées à un identifiant de portefeuille du serveur (140), le serveur (140) comprenant en outre une base de données configurée pour stocker un identifiant de transaction des une ou plusieurs transactions ajoutées au bloc du registre distribué (150), et une association de l'identifiant de transaction stocké au secret partagé.

13. Système selon la revendication 11 ou la revendication 12, dans lequel l'identifiant de transaction est basé sur une identité de l'UICC (120) et le secret partagé.

14. Système selon la revendication 10, dans lequel la transaction ajoutée au bloc est identifiée par un identifiant de portefeuille basé sur une identité de l'UICC (120) et le secret partagé.

15. Système selon la revendication 14, dans lequel le dispositif (110) comprend les un ou plusieurs processeurs et la mémoire contenant des instructions de programme pour amener les un ou plusieurs processeurs à ajouter les une ou plusieurs transactions au bloc du registre distribué (150).
